# EUROPEAN PATENT APPLICATION

(11) **EP 4 618 596 A1**
(43) Date of publication of application: **17.09.2025**
(21) Application number: 23894020.9
(22) Date of filing: 24.11.2023
(51) Int. Cl.: H04W 4/02, H04W 4/06, H04L 67/52, H04W 4/029, H04W 4/70, H04W 64/00

(54) **COMMUNICATION METHOD AND APPARATUS**

(30) Priority: 24.11.2022 CN 202211484398
(71) Applicant: Huawei Technologies Co., Ltd., Shenzhen, Guangdong 518129 (CN)
(72) Inventor: HUANG, Kang, Shenzhen, Guangdong 518129 (CN); XU, Yishan, Shenzhen, Guangdong 518129 (CN); HAN, Zhilin, Shenzhen, Guangdong 518129 (CN)
(74) Representative: Thun, Clemens
(86) International application number: PCT/CN2023/133973
(87) International publication number: WO 2024/109931

(57) **Abstract**

This application proposes a communication method and apparatus. The method includes: A first communication apparatus determines first identification information and first indication information, where the first identification information includes first location information and identifies a terminal device that matches the first location information, and the first indication information indicates the terminal device that matches the first location information to perform a first operation, and/or indicates a terminal device that does not match the first location information to perform a second operation. The first communication apparatus sends a broadcast message including the first identification information and the first indication information. The first communication apparatus sends a first message, where the first message is used to query a terminal device that has performed the first operation or the second operation. The first communication apparatus receives a second message of a first terminal device, where the second message includes identifier information of the first terminal device. According to the method, the first communication apparatus may flexibly query and obtain information about a corresponding terminal device based on an actual requirement, so that a network can efficiently manage the terminal device.

## Description

### CROSS-REFERENCE TO RELATED APPLICATIONS

This application claims priority to Chinese Patent Application No. 202211484398. 1, filed with the China National Intellectual Property Administration on November 24, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

As a tag (passive internet of things terminal) inventory procedure is widely applied in the communication field, when needing to page a current terminal device, an enterprise device or a network may request or indicate an access network device in a corresponding area to execute a tag inventory/paging procedure, to obtain related information (for example, tag information and location information) about the current terminal device. The access network device executes the tag inventory/paging procedure on all terminal devices by using a broadcast message. However, in actual application, a need of the enterprise device or the network is not constant.

In view of this, currently, a communication method urgently needs to be proposed to flexibly obtain information about a terminal device based on an actual requirement, to implement management of the terminal device.

### SUMMARY

A communication method and apparatus are provided to flexibly obtain information about a terminal device based on an actual requirement, to implement management of the terminal device.

According to a first aspect, this application provides a communication method. The method may be performed by a first communication apparatus, may be performed by a component (for example, a processor, a chip, or a chip system) of the first communication apparatus, or may be performed by an apparatus that can be used together with the first communication apparatus. This is not specifically limited in this application. The method may specifically include the following steps: The first communication apparatus determines first identification information and first indication information, where the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation. The first communication apparatus sends a broadcast message, where the broadcast message includes the first identification information and the first indication information. The first communication apparatus sends a first message, where the first message is used to query a first terminal device that has performed the first operation or the second operation. The first communication apparatus receives a second message from the first terminal device, where the second message includes identifier information of the first terminal device.

In this embodiment of this application, the first communication apparatus may be an access network device (for example, a base station), or may be a terminal device (which may be referred to as a second terminal device).

For example, the first identification information may be filter information. The filter information may identify a terminal device that matches (or satisfies) specific information. The filter information may carry the specific information, for example, information such as a location and a transmission mode. Specifically, the specific information may be set based on an actual network requirement. In this embodiment of this application, the solution of this application is described in detail by using location information as an example.

In an implementation, the first operation or the second operation may include but is not limited to any one or more of the following: setting a self-status value to a first value or a second value, and switching a self-status.

In the solution of this application, the first communication apparatus first determines the first identification information and the first indication information, where the first identification information includes the first location information, the first identification information identifies the terminal device that matches the first location information, and the first indication information indicates the terminal device that matches the first location information to perform the corresponding first operation, and/or indicates the terminal device that does not match the first location information to perform the corresponding second operation. Then, the first communication apparatus sends the first identification information and the first indication information via the broadcast message. A terminal device in signal coverage of the first communication apparatus may effectively obtain the first identification information and the first indication information in the broadcast message by receiving the broadcast message. Then, the terminal device may perform a corresponding operation change based on the first identification information and the first indication information from the first communication apparatus, so that the first communication apparatus can subsequently query and obtain information about a needed terminal device based on an operation indicated by the first communication apparatus. Therefore, according to the method, a network can more efficiently and flexibly obtain information about a terminal device to implement management of the terminal device.

In an implementation, that the first communication apparatus determines first identification information and first indication information may be implemented in, but not limited to, the following manners:

Implementation 1: The first communication apparatus receives second identification information and second indication information that are sent by a core network element, where the second identification information includes the first location information, and the second indication information indicates the first communication apparatus to determine a terminal device that matches or does not match the first location information. The first communication apparatus determines the first identification information and the first indication information based on the second identification information and the second indication information.

For example, the core network element may be a tag management function (TMF) network element or an access and mobility management function AMF network element.

In Implementation 1, the first communication apparatus may obtain address information (namely, first location information) of a specific terminal device from the core network element, and determine, based on an indication of the core network element, a terminal device that matches or does not match the first location information. In other words, the first communication apparatus may determine specific information of a terminal device and an indication purpose of the first communication apparatus based on a requirement of a core network. This implementation has high flexibility.

Implementation 2: The first communication apparatus configures the first identification information and the first indication information based on a preset configuration manner.

For example, the first communication apparatus may locally configure and obtain the first identification information and the first indication information based on the preset configuration manner. The preset configuration manner may be preconfigured by a network management system for the first communication apparatus, or may be preconfigured by the TMF network element or the AMF network element for the first communication apparatus when the first communication apparatus is powered on or before the method procedure in this embodiment of this application is triggered.

In Implementation 2, the first communication apparatus may locally configure and obtain the first identification information and the first indication information. Compared with Implementation 1, in Implementation 2, flexibility of locally configuring the first identification information and the first indication information by the first communication apparatus is low, but interaction processes between the first communication apparatus and the core network may be reduced, so that system signaling overheads can be reduced.

In an implementation, before the first communication apparatus receives the second message from the first terminal device, the method further includes: The first communication apparatus receives a random access request from the first terminal device. The first communication apparatus sends, to the first terminal device, a response to the random access request, where the response to the random access request indicates that access of the first terminal device is allowed. Alternatively, the first communication apparatus receives a random access request from the first terminal device, where the random access request carries random number request information. The first communication apparatus sends, to the first terminal device, a response to the random access request, where the response to the random access request carries a random number.

In this implementation, before the first communication apparatus receives the second message from the first terminal device, a random access procedure is executed between the first terminal device and the first communication apparatus, so that effective communication between the first terminal device and the first communication apparatus can be ensured.

In an implementation, the broadcast message further includes third indication information, the third indication information indicates the terminal device that does not match the first location information to send a location update indication, and the location update indication indicates to update location information of the terminal device.

In this implementation, the broadcast message sent by the first communication apparatus further carries the third indication information indicating the terminal device that does not match the first location information to send the location update indication. In this way, the first communication apparatus may receive a location update indication from a first terminal device that does not match the first location information, and then forward the location update indication to the core network element, so that the core network element can determine and update current location information of the first terminal device in time.

In an implementation, the second message further includes fourth indication information and any one or more of the following:
updating information about a storage area in which location information of the first terminal device is located, updating information about an address of the location information of the first terminal device, and updating a key used by the location information of the first terminal device, where the fourth indication information indicates to update the location information of the first terminal device.

In this implementation, when sending the second message carrying the identifier information of the first terminal device, the first terminal device further sends the indication information indicating to update the location information of the first terminal device and related information needed for updating the location information, so that after receiving the second message of the first terminal device, the core network element can accurately and effectively determine and update the current location information of the first terminal device.

In an implementation, the method further includes: The first communication apparatus determines current second location information of the first terminal device. The first communication apparatus sends a third message to the first terminal device, and sends a notification message to the core network element, where the third message includes the second location information of the first terminal device, and the notification message includes the second location information of the first terminal device. Alternatively, the first communication apparatus sends a fourth message to the core network element, where the fourth message includes the second location information of the first terminal device. The first communication apparatus receives a fifth message from the core network element, where the fifth message indicates to update the location information of the first terminal device. The first communication apparatus forwards the fifth message to the first terminal device.

In this embodiment of this application, if the first communication apparatus is a terminal device (which may be referred to as a second terminal device), the core network element connected to the first communication apparatus may determine and update the current second location information of the first terminal device, and implement the foregoing forwarding via an access network device (for example, a base station) connected to the first communication apparatus and the first communication apparatus. Alternatively, the first communication apparatus determines and updates the current second location information of the first terminal device, and sends the notification message to the core network element via an access network device (for example, a base station) connected to the first communication apparatus.

In this implementation, after determining the current second location information (namely, updated location information) of the first terminal device, the first communication apparatus may both effectively and accurately send the current second location information to the first terminal device, and effectively and accurately report the current second location information to the core network element.

In this embodiment of this application, if a request for querying the location information of the first terminal device is initiated by an application network element or an enterprise server, after obtaining the updated location information (namely, the second location information) of the first terminal device, the core network element further sends the updated location information (namely, the second location information) of the first terminal device to the application network element or the enterprise server. The core network may perform feedback based on an actual situation. Details are not described in this application.

According to a second aspect, this application provides a communication method. The method may be performed by a first terminal device, may be performed by a component (for example, a processor, a chip, or a chip system) of the first terminal device, or may be performed by an apparatus that can be used together with the first terminal device. This is not specifically limited in this application. The method may specifically include the following steps: The first terminal device receives a broadcast message from a first communication apparatus, where the broadcast message includes first identification information and first indication information, the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation. The first terminal device determines, based on the first identification information and the first indication information, to perform a corresponding operation, where the corresponding operation is the first operation or the second operation. The first terminal device receives a first message, where the first message is used to query a terminal device that has performed the first operation or the second operation. The first terminal device sends a second message based on the first message and the corresponding operation, where the second message includes identifier information of the first terminal device.

In this embodiment of this application, the first communication apparatus may be an access network device (for example, a base station), or may be a terminal device (which may be referred to as a second terminal device).

In an implementation, the first operation or the second operation includes any one or more of the following: keeping a self-status unchanged, and switching the self-status.

In the solution of this embodiment of this application, the first terminal device may be one or more terminal devices that can effectively receive the broadcast message and the first message sent by the first communication apparatus and that meet a query condition of the first communication apparatus. In addition, the first terminal device may be a terminal device in communication coverage of the first communication apparatus. If the first communication apparatus sends information in the broadcast message via another access network device or another terminal device, the first terminal device may alternatively be a terminal device in communication coverage of the another access network device or the another terminal device. This is not specifically limited in this embodiment of this application.

In the solution of this application, the first terminal device receives the broadcast message from the first communication apparatus, where the broadcast message includes the first identification information and the first indication information, the first identification information includes the first location information, the first identification information identifies the terminal device that matches the first location information, and the first indication information indicates the terminal device that matches the first location information to perform the corresponding first operation, and/or indicates the terminal device that does not match the first location information to perform the corresponding second operation. Then, the first terminal device may determine, based on the first identification information, whether location information of the first terminal device matches the first location information, and perform the corresponding operation based on the first indication information, so that the first communication apparatus subsequently flexibly queries and obtains information about a needed terminal device based on an operation indicated by the first communication apparatus. After receiving the first message, because the first message is used to query the terminal device that has performed the first operation or the second operation, the first terminal device may send, based on an actual query operation performed by using the second message and the operation performed by the first terminal device, the second message carrying the identifier information of the first terminal device. According to the method, the first terminal device may first perform a corresponding operation based on identification information and indication information of a network, and may subsequently report information about the first terminal device based on an actual query operation of the network. This may not only improve flexibility and efficiency of obtaining information about a terminal device by the network, but also avoid generating additional system overheads.

In an implementation, when the first terminal device determines, based on the first identification information and the first indication information, to perform the second operation, the method further includes: The first terminal device sends a random access request to the first communication apparatus. The first terminal device receives, from the first communication apparatus, a response to the random access request, where the response to the random access request indicates that access of the first terminal device is allowed.

Alternatively, the first terminal device sends a random access request to the first communication apparatus, where the random access request carries random number request information. The first terminal device receives, from the first communication apparatus, a response to the random access request, where the response to the random access request carries a random number. When the random number matches a random number stored by the first terminal device, the first terminal device determines to access the first communication apparatus.

In this implementation, effective communication between the first terminal device and the first communication apparatus can be ensured.

In an implementation, the broadcast message further includes third indication information, the third indication information indicates the terminal device that does not match the first location information to send a location update indication, and the location update indication indicates to update location information of the terminal device.

In this implementation, after receiving the broadcast message and determining that the first terminal device does not match the first location information, the first terminal device may send a location update indication to the first communication apparatus, and the first communication apparatus forwards the location update indication to a core network element, so that the core network element can effectively determine and update current location information of the first terminal device in time.

In an implementation, the second message further includes fourth indication information and any one or more of the following: updating information about a storage area in which location information of the first terminal device is located, updating information about an address of the location information of the first terminal device, and updating a key used by the location information of the first terminal device, where the fourth indication information indicates to update the location information of the first terminal device.

In this implementation, when sending the second message carrying the identifier information of the first terminal device, the first terminal device further sends the indication information indicating to update the location information of the first terminal device and related information needed for updating the location information, so that after receiving the second message of the first terminal device, the core network element can accurately and effectively determine and update the current location information of the first terminal device.

If the first communication apparatus is a terminal device, the core network element connected to the first communication apparatus for communication may determine and update the current location information of the first terminal device, and forward the foregoing message via the first communication apparatus.

In an implementation, the method further includes: The first terminal device receives a third message from the first communication apparatus, where the third message includes second location information of the first terminal device. Alternatively, the first terminal device receives, from the first communication apparatus, a fifth message from the core network element, where the fifth message indicates to update the location information of the first terminal device, and optionally, the fifth message further includes second location information of the first terminal device.

In this implementation, the first terminal device may effectively and accurately obtain updated location information (namely, the second location information) of the first terminal device, and can update the locally stored location information of the first terminal device in time.

According to a third aspect, this application provides a communication method. The method may be performed by a core network element and a first communication apparatus, may be performed by a component (for example, a processor, a chip, or a chip system) of the core network element and a component (for example, a processor, a chip, or a chip system) of the first communication apparatus, or may be performed by an apparatus that can be used together with the core network element and an apparatus that can be used together with the first communication apparatus. This is not specifically limited in this application. The method may specifically include the following steps: The core network element determines second identification information and second indication information, where the second identification information includes first location information, and the second indication information indicates the first communication apparatus to determine a terminal device that matches or does not match the first location information. The core network element sends the second identification information and the second indication information. The first communication apparatus receives the second identification information and the second indication information. The first communication apparatus determines first identification information and first indication information based on the second identification information and the second indication information, where the first identification information identifies a terminal device that matches the first location information, and the first indication information indicates the terminal device that matches the first location information to perform a corresponding first operation, and/or indicates a terminal device that does not match the first location information to perform a corresponding second operation. The first communication apparatus sends a broadcast message, where the broadcast message includes the first identification information and the first indication information. The first communication apparatus sends a first message, where the first message is used to query a first terminal device that has performed the first operation or the second operation. The first communication apparatus receives a second message from the first terminal device, where the second message includes identifier information of the first terminal device.

In this embodiment of this application, the first communication apparatus may be an access network device (for example, a base station), or may be a terminal device (which may be referred to as a second terminal device).

According to a fourth aspect, an embodiment of this application further provides a first communication apparatus. The first communication apparatus may be configured to perform the method in the first aspect. The first communication apparatus may be an access network device or a terminal device (which may be referred to as a second terminal device), may be a component (for example, a chip, a chip system, or a circuit) in the access network device or the terminal device, or may be an apparatus that can be used together with the access network device or the terminal device.

In a possible implementation, the first communication apparatus may include modules or units that one to one correspond to the method/operations/steps/actions described in the first aspect. The modules or units may be hardware circuits, software, or may be implemented by a hardware circuit in combination with software. In a possible implementation, the first communication apparatus may include a processing module and a communication module. The processing module is configured to invoke the communication module to perform a receiving function and/or a sending function.

In a possible implementation, the first communication apparatus includes a communication unit and a processing unit. The processing unit may be configured to invoke the communication unit to perform a receiving function and/or a sending function. The processing unit is configured to determine first identification information and first indication information, where the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation. The communication unit is configured to send a broadcast message, where the broadcast message includes the first identification information and the first indication information. The communication unit is further configured to send a first message, where the first message is used to query a first terminal device that has performed the first operation or the second operation. The communication unit is further configured to receive a second message from the first terminal device, where the second message includes identifier information of the first terminal device.

In a possible implementation, when determining the first identification information and the first indication information, the processing unit is specifically configured to: receive second identification information and second indication information from a core network element, where the second identification information includes the first location information, and the second indication information indicates the first communication apparatus to determine a terminal device that matches or does not match the first location information; and determine the first identification information and the first indication information based on the second identification information and the second indication information, or configure the first identification information and the first indication information based on a preset configuration manner.

In a possible implementation, the first operation or the second operation includes any one of the following: setting a self-status value to a first value or a second value, and switching a self-status.

In a possible implementation, the broadcast message further includes third indication information, the third indication information indicates the terminal device that does not match the first location information to send a location update indication, and the location update indication indicates to update location information of the terminal device.

In a possible implementation, the second message further includes fourth indication information and any one or more of the following: updating information about a storage area in which location information of the first terminal device is located, updating information about an address of the location information of the first terminal device, and updating a key used by the location information of the first terminal device, where the fourth indication information indicates to update the location information of the first terminal device.

In a possible implementation, the processing unit is further configured to determine current second location information of the first terminal device. The communication unit is further configured to: send a third message to the first terminal device, and send a notification message to the core network element, where the third message includes the second location information of the first terminal device, and the notification message includes the second location information of the first terminal device.

According to a fifth aspect, an embodiment of this application further provides a communication apparatus. The apparatus may be configured to perform the method in the second aspect. The apparatus may be a first terminal device, may be a component (for example, a chip, a chip system, or a circuit) in the first terminal device, or may be an apparatus that can be used together with the first terminal device.

In a possible implementation, the apparatus may include modules or units that one to one correspond to the method/operations/steps/actions described in the second aspect. The modules or units may be hardware circuits, software, or may be implemented by a hardware circuit in combination with software. In a possible implementation, the apparatus may include a processing module and a communication module. The processing module is configured to invoke the communication module to perform a receiving function and/or a sending function.

In a possible implementation, the apparatus includes a communication unit and a processing unit. The processing unit may be configured to invoke the communication unit to perform a receiving function and/or a sending function. The communication unit is configured to receive a broadcast message from a first communication apparatus, where the broadcast message includes first identification information and first indication information, the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation. The processing unit is configured to determine, based on the first identification information and the first indication information, to perform a corresponding operation, where the corresponding operation is the first operation or the second operation. The communication unit is further configured to receive a first message, where the first message is used to query a terminal device that has performed the first operation or the second operation. The processing unit is further configured to send a second message based on the first message and the corresponding operation, where the second message includes identifier information of the first terminal device.

In a possible implementation, the first operation or the second operation includes any one or more of the following:
keeping a self-status unchanged, and switching the self-status.

In a possible implementation, the broadcast message further includes third indication information, the third indication information indicates the terminal device that does not match the first location information to send a location update indication, and the location update indication indicates to update location information of the terminal device.

In a possible implementation, the second message further includes fourth indication information and any one or more of the following: updating information about a storage area in which location information of the first terminal device is located, updating information about an address of the location information of the first terminal device, and updating a key used by the location information of the first terminal device, where the fourth indication information indicates to update the location information of the first terminal device.

In a possible implementation, the method further includes: The first terminal device receives a third message from the first communication apparatus, where the third message includes second location information of the first terminal device.

According to a sixth aspect, an embodiment of this application further provides a first communication apparatus and a second communication apparatus. The first communication apparatus and the second communication apparatus may be configured to perform the method in the third aspect. The first communication apparatus may be an access network device or a terminal device (which may be referred to as a second terminal device), and the second communication apparatus may be a core network element. Alternatively, the first communication apparatus may be a component (for example, a chip, a chip system, or a circuit) in the access network device or the terminal device, and the second communication apparatus may be a component (for example, a chip, a chip system, or a circuit) in the core network element. Alternatively, the first communication apparatus may be an apparatus that can be used together with the access network device or the terminal device, and the second communication apparatus may be an apparatus that can be used together with the core network element.

In a possible implementation, the first communication apparatus and the second communication apparatus may include modules or units that one to one correspond to the method/operations/steps/actions described in the third aspect. The modules or units may be hardware circuits, software, or may be implemented by a hardware circuit in combination with software. In a possible implementation, the first communication apparatus may include a first processing module and a first communication module, and the second communication apparatus may include a second processing module and a second communication module. The first processing module may be configured to invoke the first communication module to perform a receiving function and/or a sending function, and the second processing module may be configured to invoke the second communication module to perform a receiving function and/or a sending function.

In a possible implementation, the first communication apparatus may include a first communication unit and a first processing unit, and the second communication apparatus may include a second communication unit and a second processing unit. The first processing unit may be configured to invoke the first communication unit to perform a receiving function and/or a sending function, and the second processing unit may be configured to invoke the second communication unit to perform a receiving function and/or a sending function.

The second processing unit is configured to determine second identification information and second indication information, where the second identification information includes first location information, and the second indication information indicates the first communication apparatus to determine a terminal device that matches or does not match the first location information. The second communication unit is configured to send the second identification information and the second indication information.

The first communication unit is configured to receive the second identification information and the second indication information. The first processing unit is configured to determine first identification information and first indication information based on the second identification information and the second indication information, where the first identification information identifies a terminal device that matches the first location information, and the first indication information indicates the terminal device that matches the first location information to perform a corresponding first operation, and/or indicates a terminal device that does not match the first location information to perform a corresponding second operation. The first communication unit is further configured to send a broadcast message, where the broadcast message includes the first identification information and the first indication information. The first communication unit is further configured to send a first message, where the first message is used to query a first terminal device that has performed the first operation or the second operation. The first communication unit is further configured to receive a second message from the first terminal device, where the second message includes identifier information of the first terminal device.

According to a seventh aspect, an embodiment of this application provides a computer storage medium. The storage medium stores a software program. When the software program is read and executed by one or more processors, the method provided in the first aspect or any possible implementation of the first aspect may be implemented, the method provided in the second aspect or any possible implementation of the second aspect may be implemented, or the method provided in the third aspect may be implemented.

According to an eighth aspect, an embodiment of this application provides a computer program product including instructions. When the instructions are run on a computer, the computer is enabled to perform the method provided in the first aspect or any possible implementation of the first aspect, the computer is enabled to perform the method provided in the second aspect or any possible implementation of the second aspect, or the computer is enabled to perform the method provided the third aspect.

According to a ninth aspect, an embodiment of this application provides a chip system. The chip system includes a processor, configured to: support a device in implementing a function in the first aspect, support a device in implementing a function in the second aspect, or support a device in implementing a function in the third aspect.

In a possible design, the chip system further includes a memory. The memory is configured to store necessary program instructions and data. The chip system may include a chip, or may include a chip and another discrete component.

According to a tenth aspect, an embodiment of this application further provides a chip system. The chip system includes a processor and an interface. The interface is configured to obtain a program or instructions. The processor is configured to invoke the program or the instructions to implement or support a device in implementing a function in the first aspect, the processor is configured to invoke the program or the instructions to implement or support a device in implementing a function in the second aspect, or the processor is configured to invoke the program or the instructions to implement or support a device in implementing a function in the third aspect.

In a possible design, the chip system further includes a memory. The memory is configured to store program instructions and data that are necessary for a terminal device. The chip system may include a chip, or may include a chip and another discrete component.

According to an eleventh aspect, a communication system is provided. The communication system includes a first communication apparatus that performs the first aspect and a first terminal device that performs the second aspect.

According to a twelfth aspect, a communication system is provided. The communication system includes a first communication apparatus that performs the first aspect or the third aspect, a first terminal device that performs the second aspect, and a core network element that performs the third aspect.

For technical effects that can be achieved in the second aspect to the twelfth aspect or any possible implementation of the second aspect to the twelfth aspect, refer to descriptions of technical effects that can be achieved in the first aspect and the second aspect or any possible implementation of the first aspect and the second aspect. Details are not described herein again.

### BRIEF DESCRIPTION OF DRAWINGS

FIG. 1 is a diagram of reading/writing a passive or semi-passive internet of things tag;
FIG. 2 is a diagram of a process in which a reader performs inventory on a tag (for example, P-IoT Tag);
FIG. 3 is a diagram of an inventory process applied to a communication network;
FIG. 4 is a diagram of a network architecture according to an embodiment of this application;
FIG. 5 is a schematic flowchart of a communication method according to an embodiment of this application;
FIG. 6A and FIG. 6B are a schematic flowchart of a first specific embodiment according to an embodiment of this application;
FIG. 7A and FIG. 7B are a schematic flowchart of a second specific embodiment according to an embodiment of this application;
FIG. 8A and FIG. 8B are a schematic flowchart of a third specific embodiment according to an embodiment of this application;
FIG. 9 is a diagram of a structure of a communication apparatus according to an embodiment of this application;
FIG. 10 is a diagram of a structure of a communication device according to an embodiment of this application; and
FIG. 11 is a diagram of an apparatus structure of a chip according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. The terms "one", "a/an", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "one embodiment", "an embodiment", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term like "example" or "for example" is used to represent an example, an illustration, or a description. Any embodiment or design scheme described with "example" or "for example" should not be explained as being more preferred or having more advantages than another embodiment or design scheme. The word like "example" or "for example" is intended to present a related concept in a specific manner for ease of understanding. "A plurality of" in embodiments of this application indicates two or more.

In this embodiment of this application, "indication information" may also be referred to as an "indication". For example, first indication information may be referred to as a first indication. In this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using a pre-agreed (for example, protocol-specified) arrangement sequence of pieces of information, to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control signaling, medium access control MAC layer signaling, and physical layer signaling. The radio resource control signaling includes, for example, radio resource control RRC signaling. The MAC layer signaling includes, for example, a MAC control element (control element, CE). The physical layer signaling includes, for example, downlink control information DCI.

For ease of understanding the technical solutions in embodiments of this application, the following first briefly describes an existing passive or semi-passive internet of things technology.

With development of an internet of things technology, application scenarios of the internet of things technology are increasingly wide, for example, warehouse, transportation, material, and fixed asset management. Usually, the internet of things technology may include a passive or semi-passive internet of things (passive internet of things, P-IoT) technology or an ambient internet of things (ambient internet of things, Ambient-IoT) technology. To be specific, a node in a network may obtain energy from an environment, to support perception, transmission, distributed computing, and the like of data in the network.

In a passive or semi-passive internet of things architecture, a passive tag or a semi-passive tag, a reader (Reader), and a server may be usually included. The reader (Reader) may read/write a tag (or a radio frequency card) in a wireless radio frequency manner, to identify the tag (or the radio frequency card), and exchange information and data with the tag (or the radio frequency card). A tag (namely, the semi-passive tag) may alternatively store electric energy by obtaining solar energy or other means, and actively send a signal of a specific frequency to the reader. The reader receives information carried in the signal and decodes the information, and further sends decoded information to a central information system for corresponding data processing. Although a name of a terminal in the internet of things technology is defined by using a passive tag/a semi-passive tag in this specification, this application is also applicable to another name of a terminal that uses a similar internet of things technology, for example, an energy storage tag, a passive energy storage tag, or a zero-power consumption terminal.

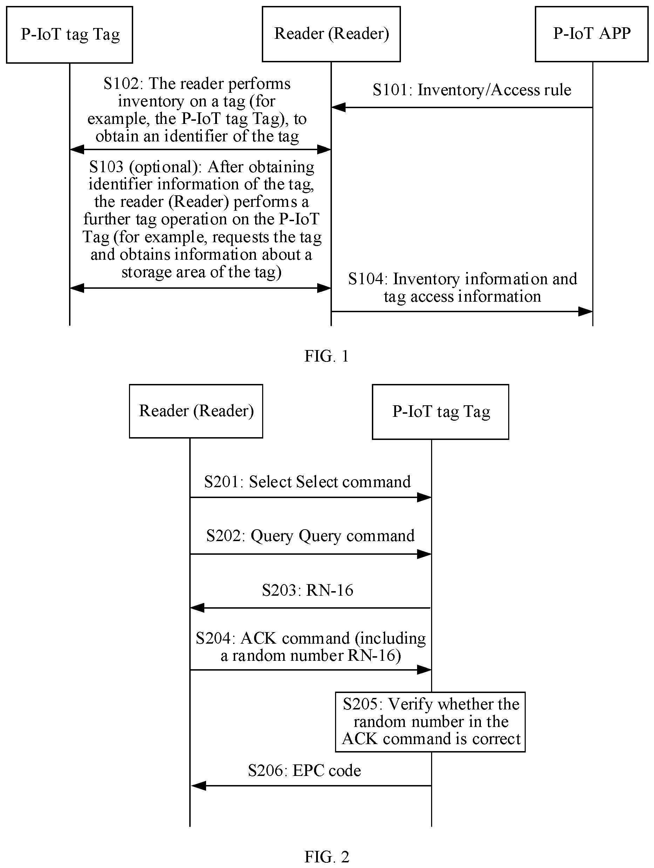

FIG. 1 is a diagram of reading/writing a passive or semi-passive internet of things tag. The following steps may be specifically included.

S101: A P-IoT application (P-IoT APP) sends an inventory/access rule to a reader (Reader).

Correspondingly, the reader receives the inventory/access rule.

For example, the inventory/access rule may be: performing inventory once every hour, and obtaining information about storage areas of a tag 1, a tag 2, and a tag 3.

S102: The reader performs inventory on a tag (for example, P-IoT Tag), to obtain an identifier of the tag.

For example, the reader performs inventory on the tag according to the received inventory/access rule, for example, performs inventory on a to-be-accessed tag once every hour, and obtains an identifier of the to-be-accessed tag.

It should be understood that a procedure in which the reader performs inventory on the tag may be understood as a procedure in which the reader and the tag (for example, P-IoT Tag) connect to and interact with each other, and obtain information of each other. Usually, each tag has a corresponding identifier, including but not limited to an electronic product code (electronic product code, EPC) and a tag identifier (tag identifier, TID).

In an inventory procedure, a tag sends an EPC or a TID of the tag to the reader, so that the reader can learn of specific tags within coverage of the reader, and report the tags to middleware and a server.

S103: After obtaining identifier information of the tag, the reader (Reader) performs a further tag operation on the P-IoT Tag (for example, requests the tag and obtains information about a storage area of the tag).

After the foregoing operations are completed, the reader (Reader) may obtain information about an accessed tag. Step S103 is an optional step.

S104: The reader (Reader) feeds back inventory information and tag information to the P-IoT APP.

The reader (Reader) feeds back the tag inventory information/tag information to the P-IoT APP.

For a process in which the reader performs inventory on the tag (for example, P-IoT Tag) in step S102, refer to FIG. 2. A specific procedure is as follows:

S201: The reader sends a select Select command to the P-IoT Tag.

Correspondingly, the P-IoT Tag receives the Select command.

Specifically, after receiving an inventory command, the reader generates the Select command, and then sends the Select command to the P-IoT Tag. The inventory command includes a tag range, for example, EPCs/TIDs within some specific ranges. After receiving (monitoring) the Select command, the tag determines whether the tag belongs to a to-be-inventoried tag range in the Select command. If belonging to the tag range, the tag continues to monitor a subsequent Query command. If the tag does not belong to the tag range, the tag does not subsequently perform the following steps (in other words, does not perform any action).

S202: The reader sends the Query command to the P-IoT Tag.

Correspondingly, after receiving the valid Query command, the P-IoT Tag generates a random number.

S203: The P-IoT Tag sends an RN-16 to the reader.

For example, after receiving the valid Query command, the tag whose random number is 0 feeds back, to the reader, a temporary password RN-16, namely, a 16-bit random number.

S204: The reader sends an acknowledgement (acknowledgement, ACK) command to the P-IoT Tag.

After receiving the random number from the tag, the reader sends the ACK command to the tag. The command includes the random number (RN-16) that is just received.

S205: The P-IoT Tag verifies whether the random number in the ACK command is correct.

If verifying that the random number in the ACK command is correct, the P-IoT Tag performs next step S206.

S206: The P-IoT Tag sends an EPC code to the reader.

In addition, after sending the EPC code of the P-IoT Tag to the reader, the P-IoT Tag enters a short sleep state.

After receiving the EPC code from the tag, the reader completes the inventory on the tag.

Optionally, the reader continues to send a QueryRep command, the tag that receives QueryRep subtracts 1 from the original random number, and steps S203 to S206 are re-performed until inventory on all tags are completed.

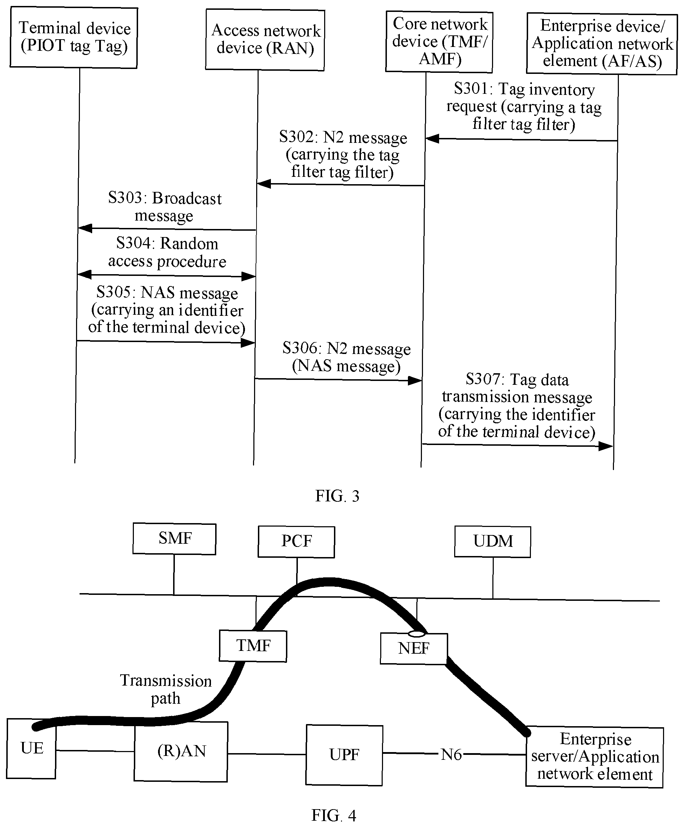

In an existing 3GPP network, a RAN is used as a reader. As shown in FIG. 3, a transmission architecture and an inventory procedure on a control plane are as follows:
S301: An enterprise device/application function (AS/AF) network element sends a tag inventory request to a core network device (TMF/AMF).

Correspondingly, the core network device (TMF/AMF) receives the tag inventory request, and determines an access network device. The tag inventory request carries a filter used to filter a tag (tag filter), a tag operation type, and the like. The filter may include a mask and a mask length that are needed for comparison, and a storage area location and a start location that correspond to comparison information. The tag operation type may include types such as inventory, reading, writing, locking, and killing.

The enterprise device/application network element may alternatively send the tag inventory request to the core network device via a capability exposure network element (NEF).

S302: The core network device (TMF/AMF) sends an N2 message to the access network device (RAN).

Correspondingly, the access network device receives the N2 message, where the N2 message carries the filter (tag filter).

S303: The access network device broadcasts a message.

Correspondingly, a terminal device (PIOT Tag) receives the broadcast message, where the broadcast message includes information about the filter (tag filter).

For step S303, refer to step S201 in FIG. 2. Details are not described herein again.

S304: The terminal device (PIOT Tag) and the access network device (RAN) execute a random access procedure.

A terminal device that successfully matches the filter (tag filter) can establish a connection to the access network device.

For step S304, refer to steps S202 to S204 in FIG. 2. Details are not described herein again.

S305: The terminal device (PIOT Tag) sends a NAS message to the access network device (RAN).

Correspondingly, the access network device (RAN) receives the NAS message, where the NAS message carries identifier information of the terminal device (PIOT Tag).

S306: The access network device (RAN) sends an N2 message to the core network device (TMF/AMF), where the N2 message carries the NAS message.

In S305, after receiving the NAS message from the terminal device, the access network device (RAN) does not parse the NAS message, but encapsulates the NAS message into the N2 message, and transparently transmits the N2 message to the core network device (TMF/AMF).

Correspondingly, after receiving the N2 message, the core network device obtains the NAS message from the N2 message, and then parses the NAS message to obtain an identifier of the terminal device.

S307: The core network device sends a tag data transmission message to the enterprise device (application server (application server, AS))/application device (AF), where the tag data transmission message carries the identifier of the terminal device.

Correspondingly, the enterprise device/application network element receives the tag data transmission message, and obtains the identifier of the terminal device from the tag data transmission message.

Alternatively, the core network device may send a tag data transmission message to the enterprise device/application device (AS/AF) via the NEF network element.

As a tag (passive internet of things terminal) inventory procedure is applied in the communication field, when needing to page a current terminal device, the enterprise device or a network may request or indicate an access network device in a corresponding area to execute a tag inventory/paging procedure, to obtain related information (for example, tag information and location information) about the current terminal device. The access network device executes the tag inventory/paging procedure on all terminal devices by using the broadcast message. However, in actual application, the enterprise device or the network only needs to focus on some specific terminal devices (for example, terminal devices whose locations change), and obtain and update location information of the specific terminal devices, to implement corresponding mobility management. It is clear that executing the tag inventory/paging procedure by the access network device on all the terminal devices in the foregoing descriptions causes low execution efficiency and an additional resource waste. In addition, due to an ultra-low-cost design of the passive internet of things terminal, the passive internet of things terminal cannot actively perform mobility registration update based on the broadcast message and communicate with the access network device.

In view of the foregoing problems, currently, a communication method urgently needs to be proposed to flexibly obtain information about a terminal device based on an actual requirement, to implement management of the terminal device.

Therefore, this application proposes a communication method. The method includes: A first communication apparatus determines first identification information and first indication information, where the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation. The first communication apparatus sends a broadcast message, where the broadcast message includes the first identification information and the first indication information. Further, the first communication apparatus sends a first message, where the first message is used to query a first terminal device that has performed the first operation or the second operation. The first communication apparatus receives a second message from the first terminal device, where the second message includes identifier information of the first terminal device. According to the method, the first communication apparatus may flexibly query and obtain information about a corresponding terminal device based on an actual requirement, so that a network can efficiently manage the terminal device.

The solutions provided in embodiments of this application are applicable to a 5G system architecture, and are further applicable to, but not limited to, a long term evolution (long term evolution, LTE) communication system and various future evolved wireless communication systems.

A 5G network architecture is used as an example. FIG. 4 is a diagram of a network architecture in which an internet of things terminal communicates with an enterprise via a core network and to which a method provided in an embodiment of this application is applicable. As shown in FIG. 4, the network architecture may include an access network and the core network. A terminal device may access an enterprise server/application network element via the access network and the core network. The enterprise server/application network element may be equivalent to a data network (data network, DN) in a 5G network architecture.

The terminal device may be a user equipment (user equipment, UE), a mobile station, a mobile terminal, an application client, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an urban air transportation vehicle (like an uncrewed aerial vehicle or a helicopter), a ship, a robot, a mechanical arm, a smart home device, or the like. In the accompanying drawings and the following embodiments of this application, a UE is used as an example of the terminal device for description. A UE that appears in any subsequent place may alternatively be replaced with the terminal device or another example of the terminal device.

In this embodiment of this application, the terminal device may alternatively be an internet of things terminal device, namely, a new low-power consumption and low-cost terminal device. The internet of things terminal may be a passive terminal device, a semi-passive terminal device, a passive energy storage terminal device, an energy storage terminal device, a semi-passive energy storage terminal device, an active terminal device, or the like. In embodiments of this application and the accompanying drawings, a tag (for example, P-IoT Tag) may also be used to represent the internet of things terminal device. A specific form of the internet of things terminal device is not limited in embodiments of this application.

The access network is used to implement an access-related function, may provide a network access function for an authorized user in a specific area, and can determine transmission links with different quality based on a user level, a service requirement, and the like, to transmit user data. The access network forwards a control signal and user data between the UE and the core network. The access network may include an access network device. The access network device may be a device that provides access for the UE, and may include a radio access network (radio access network, RAN) device and another type of access network device, for example, a trusted non-3GPP access network device, an untrusted non-3GPP access network device, or a wired access network device. This is not specifically limited in this application.

The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, names of a device having a base station function may be different. For example, in a 5G system, the device is referred to as a RAN or a next-generation node base station (next-generation Node base station, gNB). In a long term evolution (long term evolution, LTE) system, the device is referred to as an evolved NodeB (evolved NodeB, eNB or eNodeB).

The access network device and the UE may be at a fixed location, or may be mobile. The access network device and the UE may be deployed on land, where the deployment includes indoor, outdoor, handheld, or vehicle-mounted deployment; may be deployed on a water surface; or may be deployed on an airplane, a balloon, or an artificial satellite in the air. An application scenario of the access network device and the UE is not limited in embodiments of this application. In addition, in embodiments of this application, when the access network device may be configured to establish a connection to the internet of things terminal device to exchange information, the access network device may be considered as a reader.

The core network is responsible for maintaining subscription data of a mobile network, and provides session management, mobility management, policy management, security authentication, and another function for the UE. The core network includes but is not limited to one or more of the following network elements: a unified data management (unified data management, UDM) network element, a policy control function (policy control function, PCF) network element, a session management function (session management function, SMF) network element, a network exposure function (network exposure function, NEF) network element, an application function (application function, AF) network element, and a user plane function (user plane function, UPF) network element.

In addition, in this embodiment of this application, the network architecture further includes a core network element. The core network element is mainly configured to manage an internet of things terminal device, and transfer information about the enterprise and the internet of things terminal. Specific management may include access management, connection management, session management, and the like. In the network architecture shown in FIG. 4, the core network element is referred to as a tag management (tag management function, TMF) network element. In this embodiment of this application, the core network element may also have another name, and the TMF network element is merely used as an example.

The TMF network element in FIG. 4 may serve as an independent network element, is connected to the access network device, and establish a connection to the application network element via the NEF network element, or the TMF network element can directly establish a connection to the application network element. Alternatively, the TMF network element may be integrated into another network element, for example, an AMF network element or a UPF network element, and may serve as a part of logical functions of the another network element. If the TMF network element is integrated into the AMF network element, the TMF network element may be connected to the access network device through an N2 interface, and may be connected to the application network element via the NEF network element. If the TMF network element is integrated into the UPF network element, the TMF network element may be connected to the access network device through an N3 interface, and may directly establish an IP connection to the enterprise server.

The following further correspondingly describes functions of other main core network elements in embodiments of this application.

The SMF network element is mainly responsible for session management in the mobile network, for example, session establishment, modification, and release. A specific function is, for example, allocating an internet protocol (internet protocol, IP) address to a user, or selecting a UPF that provides a packet forwarding function.

The UPF network element is mainly responsible for forwarding and receiving user data, and may receive user data from a data network, and transmit the user data to the UE via the access network device, or may receive user data from the UE via the access network device, and forward the user data to the data network.

The UDM network element includes functions such as performing of subscription data management, and user access authorization.

The NEF network element is mainly configured for capability supporting and event exposure]

The AF network element transfers a requirement of an application side on a network side, for example, a QoS requirement or user status event subscription. The AF may be a third-party functional entity, or may be an operator-deployed application service, for example, an IP multimedia subsystem (IP Multimedia Subsystem, IMS) voice call service.

The PCF network element mainly supports providing a unified policy framework to control a network behavior, and providing a policy rule for a control layer network function, and is responsible for obtaining user subscription information related to policy decision. The PCF network element may provide, for the AMF network element and the SMF network element, a policy, for example, a QoS policy or a slice selection policy.

A plurality of services may be deployed on the DN, and a service like data and/or voice may be provided by the DN for the UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee in the company may be the UE, and the mobile phone or the computer of the employee can access information, a data resource, or the like on the internal office network of the company. The enterprise server/application network element is used as an example in FIG. 4.

FIG. 4 shows only some network elements of the access network and the core network in embodiments of this application. The network architecture may further include a unified data repository (unified data repository, UDR) network element, an access and mobility management function (access and mobility management function, AMF) network element, a network repository function (network repository function, NRF) network element, an authentication server function (authentication server function, AUSF) network element, a network data analytics function (Network Data Analytics Function, NWDAF) network element, and the like. For functions of these network elements, service interfaces corresponding to the network elements, and the like, refer to descriptions of an existing network architecture. Details are not described herein.

In embodiments of this application, the AF network element, the UDM network element, the UDR network element, the PCF network element, the SMF network element, the AMF network element, the NRF network element, the AUSF network element, the NEF network element, the UPF network element, the NWDAF network element, and the TMF network element may also be respectively referred to as an AF, a UDM, a UDR, a PCF, an SMF, an AMF, an NRF, an AUSF, a NEF, a UPF, an NWDAF and a TMF for short, as shown in FIG. 4.

It may be understood that the foregoing network elements or functions may be network elements in a hardware device, or may be software functions that are run on dedicated hardware, or may be instantiated virtualization functions on a platform (for example, a cloud platform). In a possible implementation, the foregoing network elements or functions may be implemented by one device, or may be jointly implemented by a plurality of devices, or may be implemented by one functional module in one device. This is not specifically limited in embodiments of this application.

The following describes the technical solutions of this application with reference to specific embodiments.

An embodiment of this application provides a communication method. The method is applicable to but is not limited to the network architecture in FIG. 4. The method may be performed by a communication device (a first communication apparatus or a terminal device) in this application, or may be performed by a controller or a chip corresponding to the communication device (the first communication apparatus or the terminal device). A network element in this application may be a physical entity network element, or may be a virtual network element. A form of the network element in this application is not specifically limited.

In addition, an embodiment of this application provides a communication method. The method may be performed by a network element in this application, or may be performed by a chip corresponding to the network element in this application. The network element in this application may be a physical entity network element, or may be a virtual network element. A form of the network element in this application is not specifically limited. In addition, it should be noted that ordinal numbers such as "first" and "second" mentioned below are used to distinguish between a plurality of objects for ease of description, but are not used to limit a sequence, a time sequence, priorities, or importance degrees of the plurality of objects. Specific forms of the first communication apparatus and the related network element in this embodiment are not limited in this application.

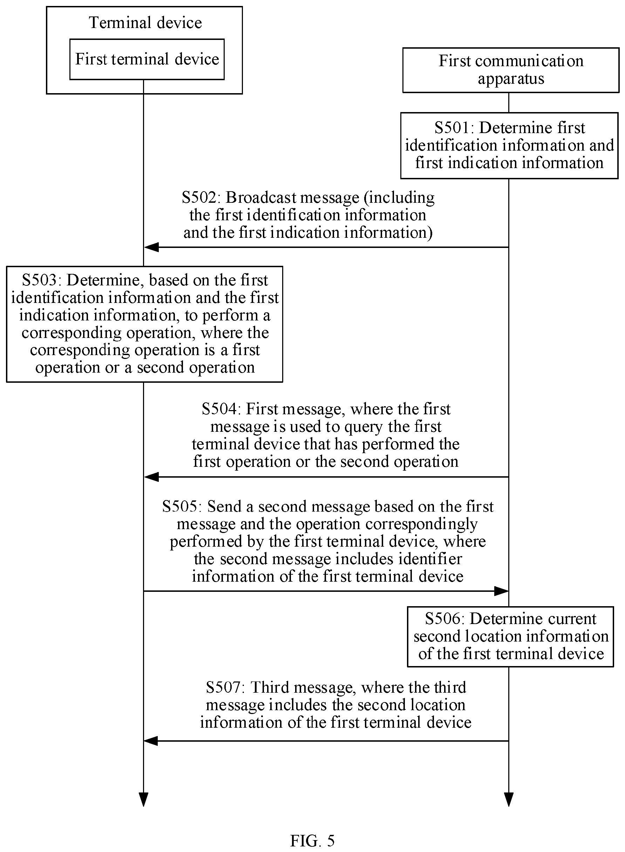

FIG. 5 is a flowchart of a communication method according to an embodiment of this application. The method may specifically include the following steps.

S501: A first communication apparatus determines first identification information and first indication information, where the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation.

In this embodiment of this application, the first communication apparatus may be an access network device (for example, a base station), or may be a terminal device (which may be referred to as a second terminal device).

In an implementation, the first operation or the second operation may include but is not limited to any one of the following: setting a self-status value to a first value or a second value, and switching a self-status.

For example, the first indication information indicates the terminal device that matches the first location information to set a self-status value to a first value 1, and indicates the terminal device that does not match the first location information to set a self-status value to a second value 2.

Alternatively, the first indication information only indicates the terminal device that does not match the first location information or the terminal device that does not match the first location information to switch a self-status.

In this embodiment of this application, it may be understood that an objective of the first indication information is to indicate the terminal device that matches the first location information and/or the terminal device that does not match the first location information to perform a corresponding operation, to distinguish from each other. In actual application, the terminal device that matches the first location information and the terminal device that does not match the first location information may be flexibly distinguished in another manner. This is not specifically limited in this application.

In an implementation, that a first communication apparatus determines first identification information and first indication information may be implemented in, but not limited to, the following manners:

Implementation 1: The first communication apparatus may receive second identification information and second indication information that are sent by a core network element, where the second identification information includes the first location information, and the second indication information indicates the first communication apparatus to determine a terminal device that matches or does not match the first location information. The first communication apparatus determines the first identification information and the first indication information based on the second identification information and the second indication information.

For example, the core network element may be a tag management function (TMF) network element or an access and mobility management function AMF network element.

Implementation 2: The first communication apparatus configures the first identification information and the first indication information based on a preset configuration manner.

For example, the first communication apparatus may locally configure and obtain the first identification information and the first indication information based on the preset configuration manner. The preset configuration manner may be preconfigured by a network management system for the first communication apparatus, or may be preconfigured by the TMF network element or the AMF network element for the first communication apparatus when the first communication apparatus is powered on or before the method procedure in this embodiment of this application is triggered, so that the first communication apparatus can locally configure and obtain the first identification information and the first indication information, and then send the first identification information and the first indication information in a periodic broadcast manner.

S502: The first communication apparatus sends a broadcast message, where the broadcast message includes the first identification information and the first indication information.

Correspondingly, a terminal device (including a first terminal device) in signal coverage of the first communication apparatus may receive the broadcast message.

In an implementation, the broadcast message further includes third indication information, where the third indication information indicates a terminal device that has performed the second operation to send location update information, and the location update information indicates to update location information of the terminal device.

For example, the first terminal device receives the broadcast message from the first communication apparatus.

S503: The terminal device (including the first terminal device) determines, based on the first identification information and the first indication information, to perform a corresponding operation, where the corresponding operation is the first operation or the second operation.

According to steps S501 to S503, in terminal devices that can communicate with the first communication apparatus, the terminal device that matches the first location information may be identified by using the first identification information. Further, one or both of two types of terminal devices (namely, the terminal device that matches the first location information and the terminal device that does not match the first location information) may be indicated by the first indication information to perform the corresponding operation. In this way, in a subsequent procedure, a network may flexibly and quickly select or determine, based on the operations performed by the terminal devices, a needed terminal device from the terminal devices, and obtain information about the terminal device.

In steps S501 to S503, an example in which the first communication apparatus sends one broadcast message, where the broadcast carries the first identification information (including the first location information) and the first indication information is used to describe the solution of this application. However, this does not constitute a specific limitation on the solution of this application. In actual application, the first communication apparatus may further periodically send a plurality of broadcast messages. Each broadcast message may correspondingly carry one or more pieces of identification information and indication information. Quantities of pieces of identification information and indication information carried in each broadcast message are not specifically limited in this application. In addition, location information included in identification information carried in different broadcast messages may be the same or different. Similarly, operations indicated by indication information carried in different broadcast messages may be the same or different. Therefore, with reference to steps S501 to S503, the core network element or the first communication apparatus may perform flexible setting and information combination based on an actual requirement.

S504: The first communication apparatus sends a first message, where the first message is used to query the first terminal device that has performed the first operation or the second operation.

Correspondingly, the terminal device (including the first terminal device) in communication coverage of the first communication apparatus may receive the first message. For example, the first terminal device receives the first message.

S505: The first terminal device sends a second message based on the first message and the operation correspondingly performed by the first terminal device, where the second message includes identifier information of the first terminal device.

Correspondingly, the first communication apparatus receives the second message from the first terminal device.

In this embodiment of this application, the first terminal device may generally be a terminal device that satisfies a query condition of the first message and that is in the communication coverage of the first communication apparatus. In other words, the first terminal device may be one or more terminal devices that meet the query condition of (or that are needed by) the first communication apparatus.

For example, the terminal device in the coverage of the first communication apparatus has performed the corresponding operation in step S503. If the first message sent by the first communication apparatus in step S504 is used to query the terminal device that has performed the second operation (in other words, query the terminal device that does not match the first location information), in the terminal device in the communication coverage of the first communication apparatus, the terminal device that has performed the second operation (namely, the terminal device that does not match the first location information, which may be collectively referred to as the first terminal device) sends the second message (carrying the identifier information) to the first communication apparatus, but a terminal device that has not performed the second operation does not send the second message to the first communication apparatus.

In an implementation, if the first message sent by the first communication apparatus is used to query the first terminal device that has performed the second operation (namely, the terminal device that does not match the first location information), the first terminal device sends the second message to the first communication apparatus, where the second message includes the identifier information of the first terminal device, and may further include fourth indication information and any one or more of the following:
updating information about a storage area in which location information of the first terminal device is located, updating information about an address of the location information of the first terminal device, and updating a key used by the location information of the first terminal device, where the fourth indication information indicates to update the location information of the first terminal device.

In an implementation, before sending the second message to the first communication apparatus, the first terminal device establishes a random connection to the first communication apparatus. An establishment manner may include but is not limited to the following:
Manner 1: The first terminal device sends a random access request to the first communication apparatus. Correspondingly, the first communication apparatus receives the random access request. If determining to allow the first terminal device to access, the first communication apparatus may send, to the first terminal device, a response to the random access request, where the response to the random access request indicates that access of the first terminal device is allowed. Correspondingly, the first terminal device receives the response to the random access request. In Manner 1, the first communication apparatus side may determine to allow the first terminal device to access, and notify, by using a response message, the first terminal device of a result of allowing the first terminal device to access.

Manner 2: The first terminal device sends a random access request to the first communication apparatus, where the random access request carries random number request information. Correspondingly, the first communication apparatus receives the random access request. The first communication apparatus may send, to the first terminal device based on the random access request, a response to the random access request, where the response to the random access request carries a random number. The first terminal device obtains the random number from the response to the random access request. If the random number matches a random number stored by the first terminal device, the first terminal device determines that the first communication apparatus can be accessed. In Manner 2, the first terminal device may actively determine that the first communication apparatus can be accessed.

In some embodiments, the first communication apparatus sends the identifier information of the first terminal device to the core network element, and the core network element sends the identifier information of the first terminal device to an enterprise server or an application network element. For example, the core network element may be a tag management function TMF network element, an AMF network element, or another network element having a terminal device management capability.

In some other embodiments, if the first message sent by the first communication apparatus is used to query the first terminal device that has performed the second operation (namely, the terminal device that does not match the first location information), after receiving the second message from the first terminal device (namely, the terminal device that does not match the first location information), the first communication apparatus further performs the following steps S506 and S507.

S506: The first communication apparatus determines current second location information of the first terminal device.

For example, for the first terminal device that does not match the first location information, the first communication apparatus may re-determine current location information (namely, the second location information) of the first terminal device. For details about how the first communication apparatus determines the current location information of the first terminal device, refer to implementation in the conventional technology. Details are not described herein.

In this embodiment of this application, if the first communication apparatus is a terminal device (which may be referred to as a second terminal device), the core network element connected to the first communication apparatus may determine and update the current second location information of the first terminal device, and implement the foregoing forwarding via an access network device (for example, a base station) connected to the first communication apparatus and the first communication apparatus. Alternatively, the first communication apparatus determines and updates the current second location information of the first terminal device, and sends a notification message to the core network element via an access network device (for example, a base station) connected to the first communication apparatus.

S507: The first communication apparatus sends a third message to the first terminal device, where the third message includes the second location information of the first terminal device.

In step S507, when sending the second location information of the first terminal device to the first terminal device by using the third message, the first communication apparatus further sends the notification message to the core network element, where the notification message includes the second location information of the first terminal device. Optionally, the core network element sends the second location information of the first terminal device to the enterprise server/application network element.

In this embodiment of this application, the first communication apparatus may alternatively send updated second location information to the first terminal device in the following manner:
First, the first communication apparatus sends a fourth message to the core network element, where the fourth message includes the second location information of the first terminal device. Then, the core network element may optionally perform authentication and authorization on the first terminal device based on the fourth message, and send a fifth message to the first communication apparatus after the authentication and authorization succeeds, where the fifth message indicates to update the location information of the first terminal device, and optionally, the fifth message includes the second location information of the first terminal device. Finally, the first communication apparatus forwards the fifth message to the first terminal device.

In addition, in this embodiment of this application, for specific location information, the first communication apparatus identifies a terminal device that matches the location information and a terminal device that does not match the location information, to implement mobility management of the terminal device. In another application scenario, the network or the enterprise server may alternatively obtain other information of a terminal device with reference to a manner in which the network obtains the location information of the terminal device in this application, to implement corresponding management of the terminal device. Details are not described in this embodiment of this application.

Therefore, this application proposes a communication method. The method includes: A first communication apparatus determines first identification information and first indication information, where the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation. The first communication apparatus sends a broadcast message, where the broadcast message includes the first identification information and the first indication information. Further, the first communication apparatus sends a first message, where the first message is used to query a first terminal device that has performed the first operation or the second operation. The first communication apparatus receives a second message from the first terminal device, where the second message includes identifier information of the first terminal device. According to the method, the first communication apparatus may flexibly query and obtain information about a corresponding terminal device based on an actual requirement, so that a network can efficiently manage the terminal device.

For the communication method provided in the embodiment of this application shown in FIG. 5, the following further provides detailed descriptions by using several specific embodiments.

### Specific Embodiment 1:

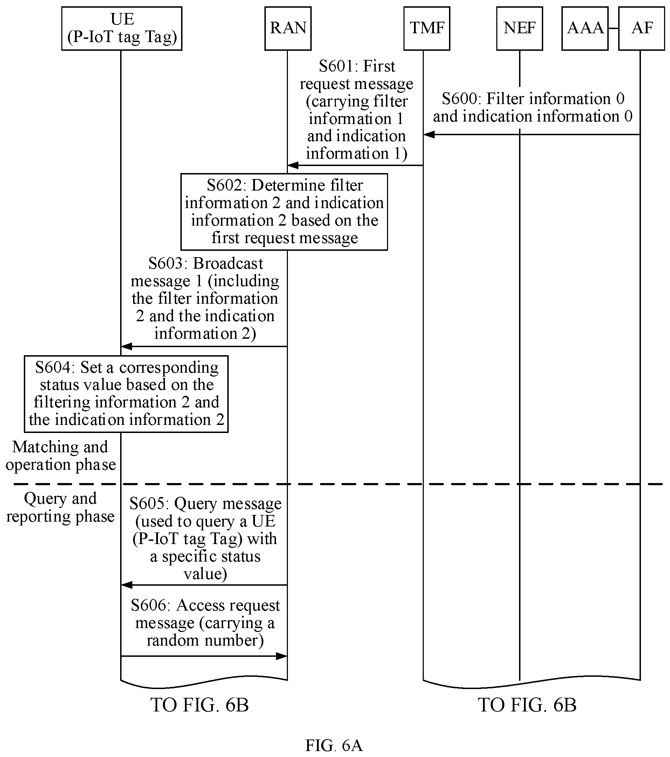

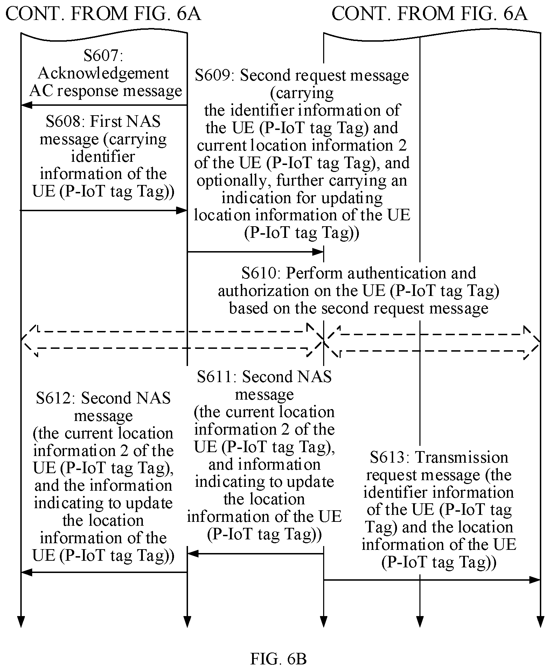

Specific Embodiment 1 mainly describes a case that a core network element indicates a first communication apparatus to trigger a method procedure in this embodiment of this application. In specific Embodiment 1, for example, the core network element in the foregoing solution of this application is a TMF network element, the terminal device in the foregoing solution of this application is a UE (or a tag P-IoT Tag), and the first communication apparatus in the foregoing solution of this application is an access network device (RAN). Refer to FIG. 6A and FIG. 6B. A specific procedure is as follows:
S600: The TMF receives filter information 0 and indication information 0 from an application function AF.

In this embodiment of this application, the AF may be connected to an authentication, authorization, and accounting (authentication, authorization, and accounting, AAA) server.

The TMF may receive the filter information 0 and the indication information 0 from the AF, where the filter information 0 includes location information 1, and the indication information 0 may indicate to determine a terminal device UE (tag P-IoT Tag) that matches or does not match the location information 1.

S601: The TMF sends a first request message to the RAN, where the first request message carries filter information 1 and indication information 1.

Correspondingly, the RAN receives the first request message from the TMF. The filter information 1 (equivalent to the second identification information in the foregoing solution of this application) includes the location information 1 (equivalent to the first location information in the foregoing solution of this application). The filter information 1 may identify a UE (P-IoT Tag) that matches the location information 1. The indication information 1 (equivalent to the second indication information in the foregoing solution of this application) may indicate the RAN to determine a UE (P-IoT Tag) that matches or does not match the location information 1.

For example, the first request message may be an N2 message.

In this embodiment of this application, a manner in which the filter information 1 identifies the UE (P-IoT Tag) that matches the location information 1 may be flexibly set. For example, refer to the following several specific examples:
Example 1: The location information 1 included in the filter information 1 is A. An internet of things terminal UE (P-IoT Tag) whose stored location information 1 is A may be considered as matching the location information A, and an internet of things terminal UE (P-IoT Tag) whose stored location information is not A may be considered as not matching the location information A. The filter information 1 identifies a UE (P-IoT Tag) configured with the location information A.

Example 2: The location information 1 included in the filter information 1 is: In a storage area X1, starting from an X2^{th} byte/bit, a mask whose length is X3 is X4. In this case, in a corresponding storage area X1 of an internet of things terminal UE (P-IoT Tag), starting from an X2^{th} byte/bit, whether data whose length is X3 is X4 is determined. If the data whose length is X3 is X4, the internet of things terminal UE (P-IoT Tag) may be considered as matching the location information 1. If the data whose length is X3 is not X4, the internet of things terminal UE (P-IoT Tag) may be considered as not matching the location information 1. The filter information 1 identifies a UE (P-IoT Tag) configured with the location information 1.

Optionally, the filter information 1 may alternatively identify a UE (P-IoT Tag) that does not match the location information 1, as shown in the following example:
Example 3: If the location information 1 is represented by 01 in binary and location information included in the filter information 1 is 00, 10, or 11 in binary, an internet of things terminal UE (P-IoT Tag) whose stored location information is 00, 10, or 11 in binary may be considered as not matching the location information 1, and an internet of things terminal UE (P-IoT Tag) whose stored location information is 01 in binary may be considered as matching the location information 1. In this case, the filter information 1 identifies the UE (P-IoT Tag) that does not match the location information 1.

Optionally, the indication information 1 may further indicate that the first request message is used for mobility management.

In a possible implementation, the first request message sent by the TMF may include a list of one or more pieces of filter information and indication information corresponding to each piece of filter information. Each piece of filter information correspondingly includes one type of information and identifies a UE (P-IoT Tag) that satisfies the information. Each piece of indication information correspondingly indicates the RAN to determine a UE (P-IoT Tag) that matches or does not match corresponding information.

For example, the first request message includes filter information 1-1 (carrying information 1, for example, preset location information), filter information 1-2 (carrying information 2, for example, preset transmission mode information), and filter information 1-3 (carrying information 3, for example, preset memory information). The three pieces of filter information respectively correspond to indication information 1-1, indication information 1-2, and indication information 1-3. The filter information 1-1 identifies a UE (P-IoT Tag) that matches the information 1. The indication information 1-1 indicates the RAN to determine a UE (P-IoT Tag) that matches or does not match the information 1. The filter information 1-2 identifies a UE (P-IoT Tag) that matches the information 2, and the indication information 1-2 indicates the RAN to determine a UE (P-IoT Tag) that matches or does not match the information 2. The filter information 1-3 identifies a UE (P-IoT Tag) that matches the information 3, and the indication information 1-3 indicates the RAN to determine a UE (P-IoT Tag) that matches or does not match the information 3.

In this embodiment of this application, the first request message may be an extended N2 message, a service-oriented N2 message, or another message that can be transmitted between the TMF and the RAN. This is not specifically limited. In addition, the filter information 1 and the indication information 1 in the first request message may be respectively the same as or different from the filtering information 0 and the indication information 0 sent by the TMF in step S600. This is not specifically limited either.

S602: The RAN determines filter information 2 and indication information 2 based on the first request message.

The RAN may determine the filter information 2 based on the filter information 1 in the first request message, and determine the indication information 2 based on the indication information 1 in the first request message.

The filter information 2 may be the same as or different from the filter information 1 in step S601a. This is not limited in this embodiment of this application. The filter information 2 may include the location information 1, and the filter information 2 identifies a UE (P-IoT Tag) that matches the location information 1.

Optionally, the filter information 2 may also include location information that is not the location information 1, and the filter information 2 may identify a UE (P-IoT Tag) that does not match the location information 1.

In this embodiment of this application, the RAN may flexibly set the filter information 2 based on the filter information 1 to identify a needed UE (P-IoT Tag).

The indication information 2 may indicate a UE (P-IoT Tag) to perform a corresponding operation, and the following three cases may be included:
Case 1: The indication information 2 indicates a UE (P-IoT Tag) that matches the location information 1 to perform an operation 1, and indicates a UE (P-IoT Tag) that does not match the location information 1 to perform an operation 2.

Case 2: The indication information 2 indicates a UE (P-IoT Tag) that matches the location information 1 to perform an operation 1.

Case 3: The indication information 2 indicates a UE (P-IoT Tag) that does not match the location information 1 to perform an operation 2.

In a possible implementation, if the first request message sent by the TMF may include a list of one or more pieces of filter information 1 and indication information 1 corresponding to each piece of filter information 1, the RAN determines corresponding filter information 2 based on the one or more pieces of filter information 1, and determines corresponding indication information 2 based on the one or more pieces of indication information 1.

For example, the RAN determines filter information 2-1 (carrying the information 1) based on the filter information 1-1 (carrying the information 1), determines filter information 2-2 (carrying the information 2) based on the filter information 1-2 (carrying the information 2), and determines filter information 2-3 (carrying the information 3) based on the filter information 1-3 (carrying the information 3).

The RAN determines indication information 2-1 based on the indication information 1-1, determines indication information 2-2 based on the indication information 1-2, and determines indication information 2-3 based on the indication information 1-3. The indication information 2-1 indicates a UE (P-IoT Tag) that matches the information 1 to perform the operation 1, and/or indicates a UE (P-IoT Tag) that does not match the information 1 to perform the operation 2. The indication information 2-2 indicates a UE (P-IoT Tag) that matches the information 2 to perform the operation 1, and/or indicates a UE (P-IoT Tag) that does not match the information 2 to perform the operation 2. The indication information 2-3 indicates a UE (P-IoT Tag) that matches the information 3 to perform the operation 1, and/or indicates a UE (P-IoT Tag) that does not match the information 3 to perform the operation 2.

S603: The RAN sends a broadcast message 1, where the broadcast message 1 includes the filter information 2 and the indication information 2.

Correspondingly, a UE (P-IoT Tag) receives the broadcast message 1.

In this embodiment of this application, a UE (P-IoT Tag) that can receive the broadcast message 1 is usually a UE (P-IoT Tag) in signal coverage of the RAN, and there may be one or more UEs (P-IoT Tags) that can receive the broadcast message 1.

Optionally, the broadcast message 1 may further include additional indication information (equivalent to the third indication information in the foregoing solution of this application). The additional indication information indicates a UE (P-IoT Tag) to further send a location update indication when reporting identifier information of the UE (P-IoT Tag), to indicate to update location information of the UE (P-IoT Tag).

In a possible implementation, the RAN may alternatively send the broadcast message 1 via another access network device. For example, the RAN, as a main access network device, sends a broadcast indication to another access network device, to indicate the another access network device to broadcast a message 1. Therefore, a transmission path in which the RAN sends the broadcast message 1 is not specifically limited in this embodiment of this application.

S604: The UE (P-IoT Tag) sets a corresponding status value (equivalent to the first operation or the second operation in the solution of this application) based on the filtering information 2 and the indication information 2.

Example 1: If the filtering information 2 includes the location information 1, the filtering information 2 identifies a UE (P-IoT Tag) that matches the location information 1, and the indication information 2 indicates the UE (P-IoT Tag) that matches the location information 1 to set a self-status value to B1 (equivalent to the first operation in the solution of this application), and indicates a UE (P-IoT Tag) that does not match the location information 1 to set a self-status value to B2 (equivalent to the second operation in the solution of this application). In this case, whether a UE (P-IoT Tag) matches the location information 1 may be determined by determining whether location information stored by the UE (P-IoT Tag) is the location information 1. A UE (P-IoT Tag) that matches the location information 1 sets a self-status value to B1, and a UE (P-IoT Tag) that does not match the location information 1 sets a self-status value to B2.

In the following step S605, if needing to query a UE that does not match the location information 1, the RAN sends a query message, where the query message is used to query a UE (P-IoT Tag) whose status value is B2, to perform random access. After receiving the query message, a UE (P-IoT Tag) performs random access if a self-status value is B2, or does not perform random access if a self-status value is not B2.

Example 2: If the filtering information 2 includes the location information 1, the filtering information 2 identifies a UE (P-IoT Tag) that matches the location information 1, and the indication information 2 indicates a UE (P-IoT Tag) that does not match the location information 1 to switch a self-status. In this case, the UE (P-IoT Tag) that does not match the location information 1 switches a self-status value. For example, initial status values of all UEs (P-IoT Tags) are 0, the UE (P-IoT Tag) that does not match the location information 1 switches the self-status value from 0 to 1, and the UE (P-IoT Tag) that matches the location information 1 remains a self-status value 0 unchanged.

In the following step S605, if needing to query a UE that does not match the location information 1, the RAN sends a query message, where the query message is used to query a UE (P-IoT Tag) whose status value is 1, to perform random access. After receiving the query message, a UE (P-IoT Tag) performs random access if a self-status value is switched to 1, or does not perform random access if a self-status value is 0.

In steps S603 and S604, the solution is described by using an example in which one broadcast message 1 carries one piece of filtering information 2 and one piece of indication information 2. In actual application, if the TMF sends the list of one or more pieces of filter information 1 and each piece of filter information 1 to the RAN, a plurality of pieces of filtering information similar to the filtering information 2 and a plurality of pieces of indication information similar to the indication information 2 may exist on the RAN side. Therefore, the RAN side may send the plurality of pieces of filtering information and the plurality of pieces of indication information by using one broadcast message, or may periodically send a plurality of broadcast messages, where each broadcast message includes one or more pieces of filtering information and corresponding indication information.

For example, in a 1^{st} periodicity, the RAN sends a broadcast message 1-1, where the broadcast message 1-1 includes filter information 2-1 (carrying location information A1) and indication information 2-1. The indication information 2-1 indicates a UE that matches A1 to set a self-status value to C1, and indicates a UE that does not match A1 to set a self-status value to C2.

In a 2^{nd} periodicity, the RAN sends a broadcast message 1-2, where the broadcast message 1-2 includes filter information 2-2 (carrying location information A2) and indication information 2-2. The indication information 2-2 merely indicates a UE that matches A2 to set a self-status value to C1.

In this case, after the 2^{nd} periodicity, only a status value of a UE that does not match the location information A1 and does not match the location information A2 is C2, and a status value of another UE is C1. Therefore, in the following step S605, if needing to query the UE that does not match A1 and does not match the location information A2 to establish a random access connection, the RAN sends a query message, where the query message is used to query a UE whose status value is C2.

According to the foregoing steps, a UE (P-IoT Tag) may determine, based on the broadcast message from the RAN, whether the UE (P-IoT Tag) matches specified location information, and perform a corresponding operation, so that the RAN subsequently queries, based on a network requirement, a UE (P-IoT Tag) that matches or does not match the specified location information. Therefore, in this embodiment of this application, steps S601 to S604 may also be understood as a matching and operation phase of a UE.

S605: The RAN sends the query message, where the query message is used to query a UE (P-IoT Tag) that executes a specific status value.

Correspondingly, a UE (P-IoT Tag) receives the query message. In this embodiment of this application, a UE (P-IoT Tag) that can receive the query message is usually a UE (P-IoT Tag) in signal coverage of the RAN, and there may be one or more UEs (P-IoT Tags) that can receive the query message.

For example, based on Example 1 in step S604, if needing to query the UE that does not match the location information 1, the RAN sends the query message, where the query message is used to query the UE (P-IoT Tag) whose status value is B2, to perform random access.

In the following step S606, after receiving the query message, a UE (P-IoT Tag) performs random access if a self-status value is B2 (in other words, the UE (P-IoT Tag) does not match the location information 1), or does not perform random access if a self-status value is not B2.

Based on Example 2 in step S604, if needing to query the UE that does not match the location information 1, the RAN sends the query message, where the query message is used to query the UE (P-IoT Tag) whose status value is 1, to perform random access.

In the following step S606, after receiving the query message, a UE (P-IoT Tag) performs random access if a self-status value is switched to 1 (in other words, the UE (P-IoT Tag) does not match the location information 1), or does not perform random access if a self-status value is 0.

S606: The UE (P-IoT Tag) sends an access request message to the RAN, where the access request message carries a random number.

In this embodiment of this application, there may be one or more UEs (P-IoT Tags) that satisfy the query message of the RAN. If there are a plurality of UEs (P-IoT Tags) that satisfy the query message of the RAN, each UE (P-IoT Tag) that satisfies the query message of the RAN may sequentially perform the following steps S606 to S613. To be specific, after one UE (P-IoT Tag) performs the following steps S606 to S613, a next UE (P-IoT Tag) performs the following steps S606 to S613.

Alternatively, the plurality of UEs (P-IoT Tags) that satisfy the query message of the RAN may synchronously perform the following steps S606 to S613. This is not specifically limited in this application.

S607: The RAN returns an acknowledgement AC response message to the UE (P-IoT Tag).

Steps S606 and S607 are a random access procedure. For details, refer to an existing technical solution. Details are not described herein.

Optionally, the RAN may send additional indication information (equivalent to the third indication information in the foregoing solution of this application) to a UE (P-IoT Tag) by using the broadcast message 1 in step S603, or may send additional indication information (equivalent to the third indication information in the foregoing solution of this application) to a UE (P-IoT Tag) in a random access procedure. The additional indication information indicates the UE (P-IoT Tag) to further send location update indication information when reporting identifier information in subsequent step S608, where the location update indication information indicates to update location information of the UE (P-IoT Tag).

The additional indication information (equivalent to the third indication information in the foregoing solution of this application) may be a specific message type or a specific message information element. This is not limited in this embodiment of this application.

S608: The UE (P-IoT Tag) sends a first NAS message to the RAN, where the first NAS message carries the identifier information of the UE (P-IoT Tag).

Correspondingly, the RAN receives the first NAS message.

For example, the identifier information of the UE (P-IoT Tag) may be an EPC, a TID, a temporary identifier, or the like.

For example, the first NAS message may alternatively be a registration request message, an uplink data transmission message, or another message that can be used to transmit terminal identifier information.

Optionally, if the RAN sends the additional indication information (equivalent to the third indication information in the foregoing solution of this application) to the UE (P-IoT Tag) by using the broadcast message 1 in step S603, or may send the additional indication information (equivalent to the third indication information in the foregoing solution of this application) to the UE (P-IoT Tag) in the random access procedure, the first NAS message may further include the location update indication information, where the location update indication information indicates to update the location information of the UE (P-IoT Tag).

Optionally, the first NAS message may further carry a related parameter used for location update. For example, the related parameter indicates one or more of the following: a need to update information about a storage area of the location information, a need to update information about an address of the location information, a need to update a key used by the location information, and the like.

S609: The RAN sends a second request message to the TMF, where the second request message carries the identifier information of the UE (P-IoT Tag) and current location information 2 of the UE (P-IoT Tag).

Correspondingly, the TMF receives the second request message.

In this embodiment of this application, if the TMF is integrated into an AMF or is deployed behind the AMF, the RAN may send the identifier information of the UE (P-IoT Tag) and the current location information 2 (equivalent to the second location information in the foregoing solution of this application) of the UE (P-IoT Tag) via a second N2 message. If the TMF is integrated into a UPF or is deployed behind the UPF, the RAN may send the identifier information of the UE (P-IoT Tag) and the current location information 2 (equivalent to the second location information in the foregoing solution of this application) of the UE (P-IoT Tag) via an N3 message. If the TMF serves as an independent network element and is directly connected to the RAN, the RAN may send the identifier information of the UE (P-IoT Tag) and the current location information 2 (equivalent to the second location information in the foregoing solution of this application) of the UE (P-IoT Tag) via an extended N2 message or another service-oriented message used for transmission of data signaling between the RAN and the TMF.

The current location information 2 (equivalent to the second location information in the foregoing solution of this application) of the UE (P-IoT Tag) is current location information that is of the UE (P-IoT Tag) and that is determined by the RAN. The current location information 2 of the UE (P-IoT Tag) may be the same as or different from the location information in the filter information 1 (or the filter information 2).

Optionally, the second request message may further include additional indication information for updating a location of the UE (P-IoT Tag).

S610: The TMF performs authentication and authorization on the UE (P-IoT Tag) based on the second request message.

Step S610 is an optional step, and may be implemented with reference to an existing terminal device authentication and authorization solution. Details are not described herein.

Optionally, the TMF may alternatively trigger authentication and authorization on the UE (P-IoT Tag) via another network element. For example, the TMF notifies the AMF, and the AMF triggers the authentication and authorization on the UE (P-IoT Tag).

S611: The TMF sends a second NAS message to the RAN, where the second NAS message carries the current location information of the UE (P-IoT Tag).

Optionally, the second NAS message further includes information indicating to update the location information of the UE (P-IoT Tag).

For example, for the UE (P-IoT Tag) that does not match the location information 1, current location information of the UE (P-IoT Tag) herein may be understood as updated location information that is of the UE (P-IoT Tag) and that is reported by the RAN.

S612: The RAN forwards the second NAS message to the UE (P-IoT Tag), where the second NAS message carries the current location information 2 of the UE (P-IoT Tag).

Correspondingly, the UE (P-IoT Tag) receives the second NAS message.

Optionally, the second NAS message further includes the information indicating to update the location information of the UE (P-IoT Tag). In this case, the UE (P-IoT Tag) may update the location information of the UE (P-IoT Tag) to the current location information 2 (equivalent to the second location information in the foregoing solution of this application) of the UE (P-IoT Tag).

S613: The TMF sends a transmission request message to the AF, where the transmission request message includes the identifier information of the UE (P-IoT Tag) and the location information of the UE (P-IoT Tag).

For example, the TMF may further send the transmission request message to the AF (enterprise network element) via a NEF.

Step S613 is an optional step. In addition, step S613 and step S611 may or may not be performed synchronously. This is not specifically limited in this embodiment of this application.

In this embodiment of this application, steps S605 to S613 may be understood as a query and reporting phase.

According to specific Embodiment 1, a core network indicates specific location information and corresponding indication information, so that the RAN can flexibly establish a connection to a terminal UE (P-IoT Tag) including the specific location information. In this way, a network can obtain, in time, location information of a terminal UE (P-IoT Tag) whose location changes. This method can avoid interaction with a terminal whose location information does not change, and reduce network and air interface overheads. In addition, in specific Embodiment 1, a location update procedure of the terminal is completely initiated by the network or the RAN. Therefore, the terminal UE (P-IoT Tag) does not need to have complex determination logic, the RAN or the network may directly determine logic of the terminal UE (P-IoT Tag), and the terminal UE (P-IoT Tag) does not need to actively trigger communication, so that implementation costs of the terminal UE (P-IoT Tag) can be reduced.

### Specific Embodiment 2:

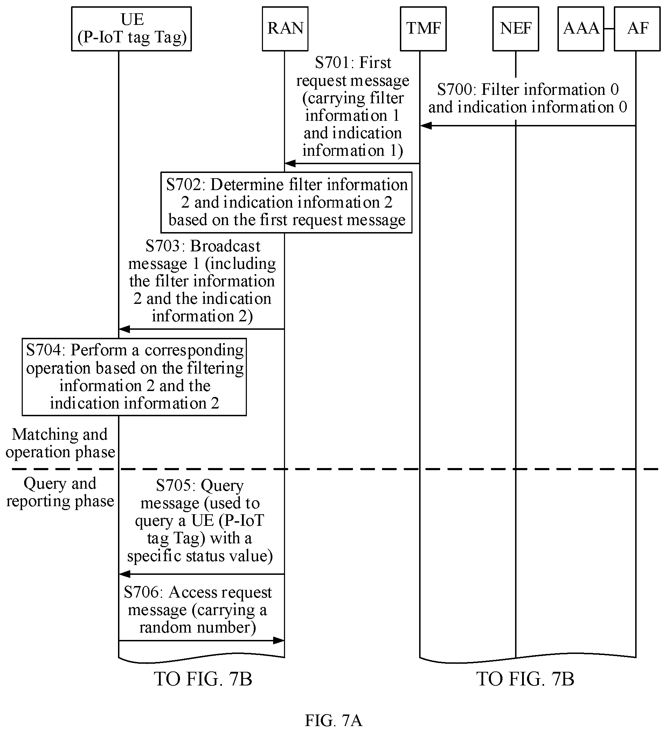

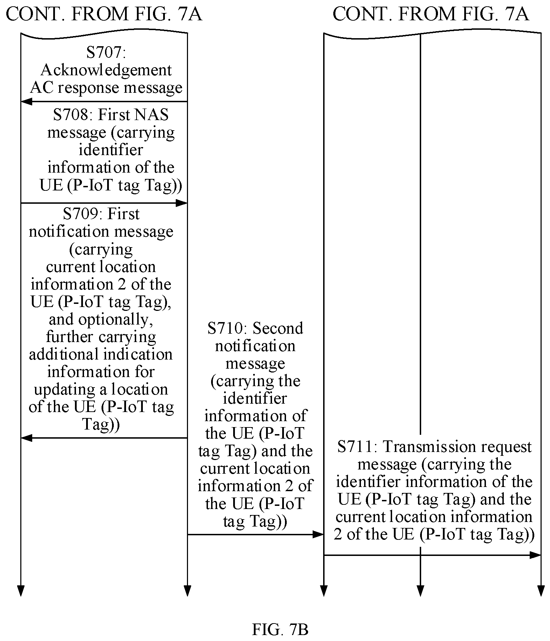

In specific Embodiment 2, for example, the core network element in the foregoing solution of this application is a TMF network element, the terminal device is a UE (or a tag P-IoT Tag), and the first communication apparatus in the foregoing solution of this application is an access network device (RAN). A difference between specific Embodiment 2 and specific Embodiment 1 lies in that the RAN may directly send information about the UE (tag P-IoT Tag) to the UE (tag P-IoT Tag) and report the information about the UE (tag P-IoT Tag) to the core network element. Refer to FIG. 7A and FIG. 7B. A specific procedure in this embodiment is as follows:
S700: The TMF receives filter information 0 and indication information 0 from an application function AF.

S701: The TMF sends a first request message to the RAN, where the first request message carries filter information 1 and indication information 1.

S702: The RAN determines filter information 2 and indication information 2 based on the first request message.

S703: The RAN sends a broadcast message 1, where the broadcast message 1 includes the filter information 2 and the indication information 2.

S704: A UE (P-IoT Tag) sets a corresponding status value (equivalent to the first operation or the second operation in the solution of this application) based on the filtering information 2 and the indication information 2.

S705: The RAN sends a query message, where the query message is used to query a UE (P-IoT Tag) that executes a specific status value.

S706: The UE (P-IoT Tag) sends an access request message to the RAN, where the access request message carries a random number.

S707: The RAN returns an acknowledgement AC response message to the UE (P-IoT Tag).

S708: The UE (P-IoT Tag) sends a first NAS message to the RAN, where the first NAS message carries identifier information of the UE (P-IoT Tag).

For steps S700 to S708, respectively refer to steps S600 to S608. Details are not described herein again.

S709: The RAN sends a first notification message to the UE (P-IoT Tag), where the first notification message carries current location information 2 of the UE (P-IoT Tag).

The current location information 2 (equivalent to the second location information in the foregoing solution of this application) of the UE (P-IoT Tag) is current location information that is of the UE (P-IoT Tag) and that is determined by the RAN. The current location information 2 of the UE (P-IoT Tag) may be the same as or different from location information in the filter information 1 (or the filter information 2).

Optionally, the first notification message (equivalent to the third message in the foregoing solution of this application) may further include additional indication information for updating a location of the UE (P-IoT Tag).

S710: The RAN sends a second notification message to the TMF, where the second notification message carries the identifier information of the UE (P-IoT Tag) and the current location information 2 of the UE (P-IoT Tag).

S711: The TMF sends a transmission request message to the AF, where the transmission request message carries the identifier information of the UE (P-IoT Tag) and the current location information 2 of the UE (P-IoT Tag).

For example, the TMF may further send the transmission request message to the AF (enterprise network element) via a NEF.

Step S711 is an optional step. In addition, step S711 and step S710 may or may not be performed synchronously. This is not specifically limited in this embodiment of this application.

According to specific Embodiment 2, after obtaining identifier information and current location information of a specified terminal UE (P-IoT Tag), the RAN may directly send the current location information of the UE (P-IoT Tag) to the terminal UE (P-IoT Tag), and indicate the terminal UE (P-IoT Tag) to update location information of the terminal UE (P-IoT Tag). The terminal UE (P-IoT Tag) can be sent via the RAN without authentication and authorization performed by the core network element. Therefore, in comparison with specific Embodiment 1, network signaling overheads generated in specific Embodiment 2 are smaller.

### Specific Embodiment 3:

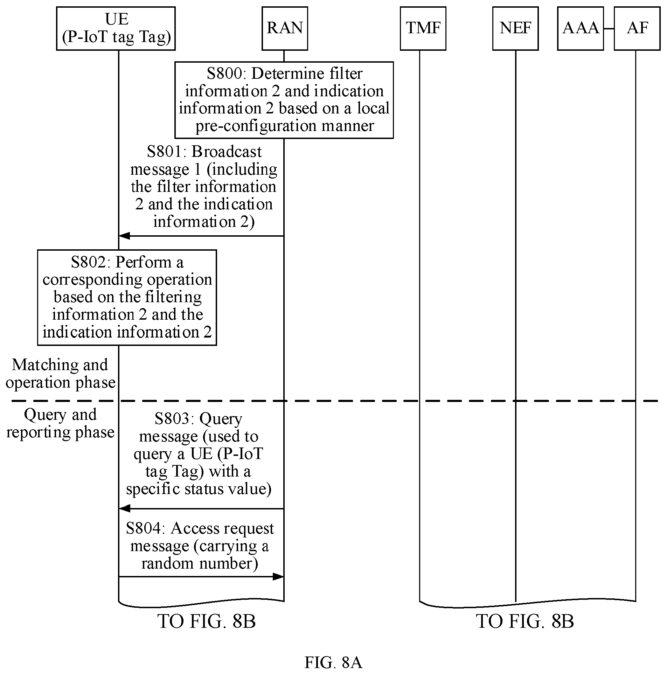

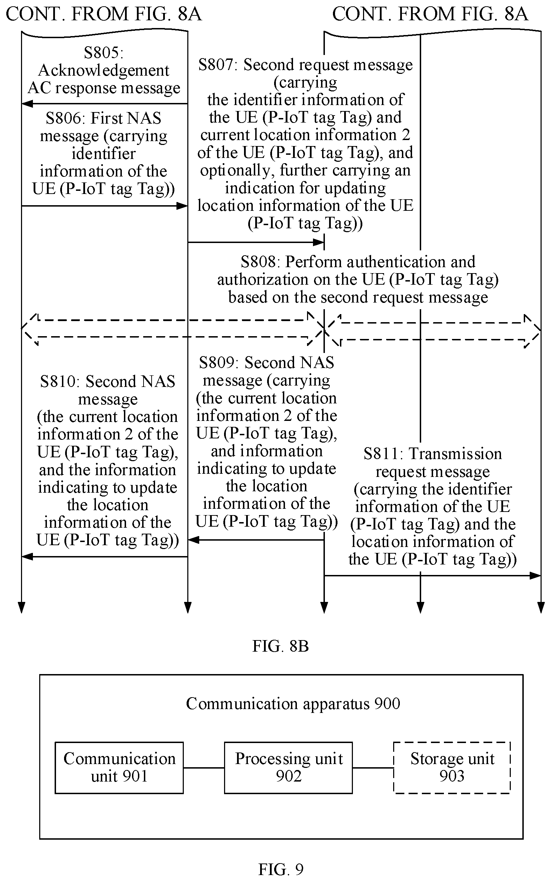

Specific Embodiment 3 mainly describes a method procedure in this embodiment of this application triggered by an access network device based on a local pre-configuration manner. In specific Embodiment 3, for example, the core network element in the foregoing solution of this application is a TMF network element, the terminal device in the foregoing solution of this application is a UE (or a tag P-IoT Tag), and the first communication apparatus in the foregoing solution of this application is an access network device (RAN). Refer to FIG. 8A and FIG. 8B. A specific procedure is as follows:

S800: The RAN determines filter information 2 and indication information 2 based on the local pre-configuration manner.

For example, the pre-configuration manner may be pre-configured by a network management system, or may be pre-configured by the TMF or an AMF by sending a third request message to the RAN when a base station is powered on or before the procedure is triggered. The third request message includes the filter information 2 and the indication information 2 that are needed by configuration information. After a pre-configuration, the base station periodically sends a broadcast message.

The pre-configuration manner further includes: Before sending the broadcast message, the RAN obtains, via the TMF or the AMF, filter information that needs to be broadcast and indication information corresponding to the filter information, where the filter information includes location information. The broadcast configuration information of the RAN may further include a periodicity or frequency of the broadcast message.

For the filtering information 2 and the indication information 2, refer to specific descriptions in step S602. Details are not described herein again.

S801: The RAN sends a broadcast message 1, where the broadcast message 1 includes the filter information 2 and the indication information 2.

For step S801, refer to specific descriptions in step S603. Details are not described herein again.

S802: A UE (P-IoT Tag) sets a corresponding status value (equivalent to the first operation or the second operation in the solution of this application) based on the filtering information 2 and the indication information 2.

For step S802, refer to specific descriptions in step S604. Details are not described herein again.

S803: The RAN sends a query message, where the query message is used to query a UE (P-IoT Tag) that executes a specific status value.

For step S803, refer to specific descriptions in step S605. Details are not described herein again.

S804: The UE (P-IoT Tag) sends an access request message to the RAN, where the access request message carries a random number.

For step S804, refer to specific descriptions in step S606. Details are not described herein again.

S805: The RAN returns an acknowledgement AC response message to the UE (P-IoT Tag).

For step S805, refer to specific descriptions in step S607. Details are not described herein again.

S806: The UE (P-IoT Tag) sends a first NAS message to the RAN, where the first NAS message carries identifier information of the UE (P-IoT Tag).

For step S806, refer to specific descriptions in step S608. Details are not described herein again.

S807: The RAN sends a second request message to the TMF, where the second request message carries the identifier information of the UE (P-IoT Tag) and current location information 2 of the UE (P-IoT Tag).

For step S807, refer to specific descriptions in step S609. Details are not described herein again.

S808: The TMF performs authentication and authorization on the UE (P-IoT Tag) based on the second request message.

For step S808, refer to specific descriptions in step S610. Details are not described herein again.

S809: The TMF sends a second NAS message to the RAN, where the second NAS message carries the current location information of the UE (P-IoT Tag).

For step S809, refer to specific descriptions in step S611. Details are not described herein again.

S810: The RAN forwards the second NAS message to the UE (P-IoT Tag), where the second NAS message carries the current location information 2 of the UE (P-IoT Tag).

For step S810, refer to specific descriptions in step S612. Details are not described herein again.

S811: The TMF sends a transmission request message to the AF, where the transmission request message includes the identifier information of the UE (P-IoT Tag) and location information of the UE (P-IoT Tag).

For step S811, refer to specific descriptions in step S613. Details are not described herein again.

According to specific Embodiment 3, the RAN may locally determine filtering information and indication information based on a pre-configuration, so that interaction between a network and the RAN can be reduced, and network signaling overheads can be reduced. In addition, this helps the network efficiently obtain location information of a terminal whose location changes and update the location information of the terminal. However, because the filtering information and the indication information are locally pre-configured by the RAN, the RAN cannot dynamically and directionally establish a connection to a terminal UE (P-IoT Tag) including specific location information. Consequently, this lacks flexibility.

In the foregoing embodiments provided in this application, the methods provided in embodiments of this application are described from a perspective of interaction between devices. To implement functions in the methods provided in embodiments of this application, the first communication apparatus (the access network device or the terminal device), the first terminal device, or the core network element may include a hardware structure and/or a software module, and implement the foregoing functions in a form of a hardware structure, a software module, or a hardware structure plus a software module. Whether a specific function in the foregoing functions is performed by using the hardware structure, the software module, or the combination of the hardware structure and the software module depends on particular applications and design constraints of the technical solutions.

In embodiments of this application, module division is an example, and is merely a logical function division. During actual implementation, another division manner may be used. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Same as the foregoing concept, as shown in FIG. 9, an embodiment of this application further provides a communication apparatus 900, configured to implement a function of the first communication apparatus (an access network device or a terminal device), the first terminal device, or the core network element in the foregoing method. For example, the communication apparatus may be a software module or a chip system. In this embodiment of this application, the chip system may include a chip, or may include a chip and another discrete component. The communication apparatus 900 may include a communication unit 901 and a processing unit 902.

In this embodiment of this application, the communication unit 901 may also be referred to as a transceiver unit, and may include a sending unit and/or a receiving unit, respectively configured to perform sending and receiving steps of the first communication apparatus (an access network device or a terminal device), the first terminal device, or the core network element in the foregoing method embodiments. The processing unit 902 may be configured to read instructions and/or data in a storage module, to enable the communication apparatus 900 to implement the foregoing method embodiments.

Optionally, the communication apparatus 900 may further include a storage unit 903. The storage unit 903 is equivalent to a storage module, and may be configured to store instructions and/or data.

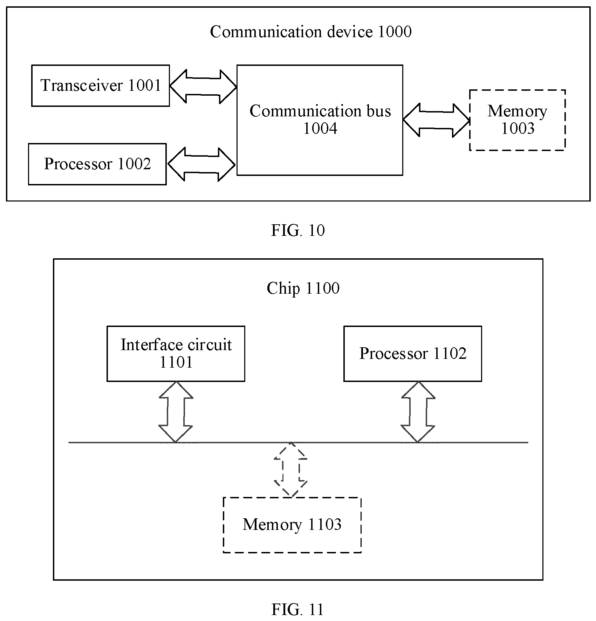

The communication apparatus provided in this embodiment of this application is described in detail with reference to FIG. 9 and FIG. 10. It should be understood that descriptions of apparatus embodiments correspond to descriptions of the method embodiments. Therefore, for content that is not described in detail, refer to the method embodiments. For brevity, details are not described herein again.

The communication unit 901 may also be referred to as a transceiver, a transceiver machine, a transceiver apparatus, and the like. The processing unit 902 may also be referred to as a processor, a processing board, a processing module, a processing apparatus, and the like. Optionally, a component that is in the communication unit 901 and that is configured to implement a receiving function may be considered as a receiving unit, and a component that is in the communication unit 901 and that is configured to implement a sending function may be considered as a sending unit. In other words, the communication unit 901 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

When the communication apparatus 900 performs the function of the first communication apparatus (an access network device or a terminal device) in the procedure shown in FIG. 5 in the foregoing embodiment,
the processing unit 902 is configured to determine first identification information and first indication information, where the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation;
the communication unit 901 is configured to send a broadcast message, where the broadcast message includes the first identification information and the first indication information; and
the communication unit 901 is further configured to: send a first message, where the first message is used to query a first terminal device that has performed the first operation or the second operation; and
receive a second message from the first terminal device, where the second message includes identifier information of the first terminal device.

When the communication apparatus 900 performs the function of the first terminal device in the procedure shown in FIG. 5 in the foregoing embodiment,
the communication unit 901 is configured to receive a broadcast message from the first communication apparatus, where the broadcast message includes first identification information and first indication information, the first identification information includes first location information, the first identification information identifies a terminal device that matches the first location information, and the first indication information indicates the terminal device that matches the first location information to perform a corresponding first operation, and/or indicates a terminal device that does not match the first location information to perform a corresponding second operation;
the processing unit 902 is configured to determine, based on the first identification information and the first indication information, to perform a corresponding operation, where the corresponding operation is the first operation or the second operation;
the communication unit 901 is further configured to receive a first message, where the first message is used to query a terminal device that has performed the first operation or the second operation; and
the processing unit 902 is further configured to send a second message via the communication unit 901 based on the first message and the corresponding operation, where the second message includes identifier information of the first terminal device.

When the communication apparatus 900 performs the function of the core network element in the procedure shown in FIG. 5 in the foregoing embodiment,
the processing unit 902 is configured to determine second identification information and second indication information, where the second identification information includes first location information, and the second indication information indicates the first communication apparatus to determine a terminal device that matches or does not match the first location information; and
the communication unit 901 is configured to send the second identification information and the second indication information.

The foregoing descriptions are merely examples. The processing unit 902 and the communication unit 901 may further perform other functions. For more detailed descriptions, refer to related descriptions in the method embodiment shown in FIG. 5. Details are not described herein again.

FIG. 10 shows a communication apparatus 1000 according to an embodiment of this application. The communication apparatus shown in FIG. 10 may be an implementation of a hardware circuit of the communication apparatus shown in FIG. 9. The communication apparatus 1000 is applicable to the foregoing flowcharts, and performs a function of the first communication apparatus (an access network device or a terminal device), the first terminal device, or the core network element in the foregoing method embodiments. For ease of description, FIG. 10 merely shows main components of the communication apparatus.

As shown in FIG. 10, the communication apparatus 1000 includes a transceiver 1001 and a processor 1002. The transceiver 1001 and the processor 1002 are coupled to each other. It may be understood that the transceiver 1001 may be a communication interface or an input/output interface, or may be an interface circuit like a transceiver circuit. Optionally, the communication apparatus 1000 may further include a memory 1003, configured to store instructions executed by the processor 1002, input data needed by the processor 1002 to run the instructions, or data generated after the processor 1002 runs the instructions.

When the communication apparatus 1000 is configured to implement the method shown in FIG. 5, the processor 1002 is configured to implement a function of the processing unit 902, and the transceiver 1001 is configured to implement a function of the communication unit 901.

In this embodiment of this application, a specific connection medium between the transceiver 1001, the processor 1002, and the memory 1003 is not limited. In this embodiment of this application, in FIG. 10, the memory 1003, the processor 1002, and the transceiver 1001 are connected through a communication bus 1004. The communication bus 1004 is represented by a bold line in FIG. 10. A connection manner between other components is merely an example for description, and is not limited thereto. The communication bus 1004 may be classified into an address bus, a data bus, a control bus, and the like. For ease of representation, only one bold line is used to represent the bus in FIG. 10, but this does not mean that there is only one bus or only one type of bus.

When the communication apparatus is a chip, FIG. 11 is a diagram of a simplified structure of the chip. The chip 1100 includes an interface circuit 1101 and one or more processors 1102. Optionally, the chip 1100 may further include a bus.

The interface circuit 1101 may be configured to send or receive data, instructions, or information. The processor 1102 may perform processing by using the data, the instructions, or other information received by the interface circuit 1101, and may send processed information through the interface circuit 1101.

The processor 1102 may be an integrated circuit chip and has a signal processing capability. In an implementation process, the steps in the foregoing communication method may be implemented through a hardware integrated logic circuit in the processor 1102, or by using instructions in a form of software. The processor 1102 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1102 may implement or perform the methods and steps that are disclosed in embodiments of this application. The general-purpose processor may be a microprocessor, or the processor may be any conventional processor or the like.

Optionally, the chip further includes a memory 1103. The memory 1103 may include a read-only memory and a random access memory, and provide operation instructions and data for the processor. A part of the memory 1103 may further include a non-volatile random access memory (NVRAM).

Optionally, the memory stores an executable software module or a data structure, and the processor may perform a corresponding operation by invoking the operation instructions stored in the memory (the operation instructions may be stored in an operating system).

Optionally, the chip may be used in the first communication apparatus (an access network device or a terminal device), the first terminal device, or the core network element in embodiments of this application. Optionally, the interface circuit 1101 may be configured to output an execution result of the processor 1102. For the communication method provided in one or more embodiments of this application, refer to the foregoing embodiments. Details are not described herein again.

It should be noted that a function corresponding to each of the interface circuit 1101 and the processor 1102 may be implemented by using a hardware design, may be implemented by using a software design, or may be implemented by using a combination of software and hardware. This is not limited herein.

An embodiment of this application further provides a computer-readable storage medium. The computer-readable storage medium stores computer instructions used to implement the method performed by the first communication apparatus in the foregoing method embodiments, and/or the computer-readable storage medium stores computer instructions used to implement the method performed by the first communication apparatus (an access network device or a terminal device), the first terminal device, or the core network element in the foregoing method embodiments.

For example, when the computer program is executed by a computer, the computer is enabled to implement the method performed by the first communication apparatus (an access network device or a terminal device), the first terminal device, or the core network element in the foregoing method embodiments.

An embodiment of this application further provides a computer program product including instructions. When the instructions are executed by a computer, the computer is enabled to implement the method performed by the first communication apparatus (an access network device or a terminal device) in the foregoing method embodiments, and/or when the instructions are executed by a computer, the computer is enabled to implement the method performed by the first terminal device in the foregoing method embodiments, and/or when the instructions are executed by a computer, the computer is enabled to implement the method performed by the core network element in the foregoing method embodiments.

An embodiment of this application further provides a chip apparatus including a processor. The processor is configured to invoke a computer program or computer instructions stored in a memory, so that the processor performs the communication method in the embodiment shown in FIG. 5.

In a possible implementation, an input of the chip apparatus corresponds to a receiving operation in the embodiment shown in FIG. 5, and an output of the chip apparatus corresponds to a sending operation in the embodiment shown in FIG. 5.

Optionally, the processor is coupled to the memory through an interface.

Optionally, the chip apparatus further includes the memory. The memory stores the computer program or the computer instructions.

Any processor mentioned above may be a general central processing unit, a microprocessor, an application-specific integrated circuit (application-specific integrated circuit, ASIC), or one or more integrated circuits configured to control program execution of the communication method in the embodiment shown in FIG. 5. The memory mentioned anywhere above may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, reference may be made to the corresponding communication method embodiments provided above. Details are not described herein again.

In this application, a hardware layer, an operating system layer running above the hardware layer, and an application layer running above the operating system layer may be further included between communication apparatuses. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by hardware, firmware, or a combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another The storage medium may be any available medium accessible to a computer. Examples of the computer-readable medium include but are not limited to: a RAM, a ROM, an electrically erasable programmable read-only memory (electrically erasable programmable read-only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared ray, radio, and microwave, the coaxial cable, the optical fiber and optical cable, the twisted pair, the DSL, or the wireless technologies such as infrared ray, radio, and microwave are included in a definition of a medium to which the coaxial cable, the optical fiber and optical cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data by a magnetic means, and the disc copies data optically by a laser means. The foregoing combination should also be included in the protection scope of the computer-readable medium.

In summary, the foregoing descriptions are merely embodiments of this application, and are not intended to limit the protection scope of this application. Any modification, equivalent substitution, improvement, and the like made based on the disclosure of this application shall fall within the protection scope of this application.

## Claims

1. A communication method, comprising:
determining, by a first communication apparatus, first identification information and first indication information, wherein the first identification information comprises first location information, the first identification information identifies a terminal device that matches the first location information, and the first indication information indicates the terminal device that matches the first location information to perform a corresponding first operation, and/or indicates a terminal device that does not match the first location information to perform a corresponding second operation;
sending, by the first communication apparatus, a broadcast message, wherein the broadcast message comprises the first identification information and the first indication information;
sending, by the first communication apparatus, a first message, wherein the first message is used to query a first terminal device that has performed the first operation or the second operation; and
receiving, by the first communication apparatus, a second message from the first terminal device, wherein the second message comprises identifier information of the first terminal device.

2. The method according to claim 1, wherein the determining, by a first communication apparatus, first identification information and first indication information comprises:
receiving, by the first communication apparatus, second identification information and second indication information from a core network element, wherein the second identification information comprises the first location information, and the second indication information indicates the first communication apparatus to determine a terminal device that matches or does not match the first location information; and determining, by the first communication apparatus, the first identification information and the first indication information based on the second identification information and the second indication information; or
configuring, by the first communication apparatus, the first identification information and the first indication information based on a preset configuration manner.

3. The method according to claim 1, wherein the first operation or the second operation comprises any one of the following:
setting a self-status value to a first value or a second value, and switching a self-status.

4. The method according to claim 1, wherein the broadcast message further comprises third indication information, the third indication information indicates the terminal device that does not match the first location information to send a location update indication, and the location update indication indicates to update location information of the terminal device.

5. The method according to claim 1 or 4, wherein the second message further comprises fourth indication information and any one or more of the following:
updating information about a storage area in which location information of the first terminal device is located, updating information about an address of the location information of the first terminal device, and updating a key used by the location information of the first terminal device, wherein the fourth indication information indicates to update the location information of the first terminal device.

6. The method according to any one of claims 1 to 5, wherein the method further comprises:
determining, by the first communication apparatus, current second location information of the first terminal device; and
sending, by the first communication apparatus, a third message to the first terminal device, and sending a notification message to the core network element, wherein the third message comprises the second location information of the first terminal device, and the notification message comprises the second location information of the first terminal device.

7. A communication method, comprising:
receiving, by a first terminal device, a broadcast message from a first communication apparatus, wherein the broadcast message comprises first identification information and first indication information, the first identification information comprises first location information, the first identification information identifies a terminal device that matches the first location information, and the first indication information indicates the terminal device that matches the first location information to perform a corresponding first operation, and/or indicates a terminal device that does not match the first location information to perform a corresponding second operation;
determining, by the first terminal device based on the first identification information and the first indication information, to perform a corresponding operation, wherein the corresponding operation is the first operation or the second operation;
receiving, by the first terminal device, a first message, wherein the first message is used to query a terminal device that has performed the first operation or the second operation; and
sending, by the first terminal device, a second message based on the first message and the corresponding operation, wherein the second message comprises identifier information of the first terminal device.

8. The method according to claim 7, wherein the first operation or the second operation comprises any one or more of the following:
keeping a self-status unchanged, and switching the self-status.

9. The method according to claim 7, wherein the broadcast message further comprises third indication information, the third indication information indicates the terminal device that does not match the first location information to send a location update indication, and the location update indication indicates to update location information of the terminal device.

10. The method according to claim 9, wherein the second message further comprises fourth indication information and any one or more of the following:
updating information about a storage area in which location information of the first terminal device is located, updating information about an address of the location information of the first terminal device, and updating a key used by the location information of the first terminal device, wherein the fourth indication information indicates to update the location information of the first terminal device.

11. The method according to any one of claims 7 to 10, wherein the method further comprises:
receiving, by the first terminal device, a third message from the first communication apparatus, wherein the third message comprises the second location information of the first terminal device.

12. A communication method, comprising:
determining, by a core network element, second identification information and second indication information, wherein the second identification information comprises first location information, and the second indication information indicates a first communication apparatus to determine a terminal device that matches or does not match the first location information;
sending, by the core network element, the second identification information and the second indication information;
receiving, by the first communication apparatus, the second identification information and the second indication information; and determining, by the access network device, first identification information and first indication information based on the second identification information and the second indication information, wherein the first identification information identifies a terminal device that matches the first location information, and the first indication information indicates the terminal device that matches the first location information to perform a corresponding first operation, and/or indicates a terminal device that does not match the first location information to perform a corresponding second operation;
sending, by the first communication apparatus, a broadcast message, wherein the broadcast message comprises the first identification information and the first indication information;
sending, by the first communication apparatus, a first message, wherein the first message is used to query a first terminal device that has performed the first operation or the second operation; and
receiving, by the first communication apparatus, a second message from the first terminal device, wherein the second message comprises identifier information of the first terminal device.

13. A communication apparatus, comprising a unit or a module configured to perform the method according to any one of claims 1 to 6, comprising a unit or a module configured to perform the method according to any one of claims 7 to 11, or comprising a unit or a module configured to perform the method according to claim 12.

14. A communication apparatus, wherein the communication apparatus comprises a processor and a storage medium, the storage medium stores instructions, and when the instructions are run by the processor, the method according to any one of claims 1 to 6 is implemented, the method according to any one of claims 7 to 11 is implemented, or the method according to claim 12 is implemented.

15. A computer-readable storage medium, wherein the computer-readable storage medium comprises instructions, and when the instructions are run by a processor, the method according to any one of claims 1 to 12 is implemented.

16. A computer program product, wherein the computer program product comprises instructions, and when the instructions are run by a processor, the method according to any one of claims 1 to 12 is implemented.
